# EUROPEAN PATENT SPECIFICATION

(11) **EP 4 652 755 B1**
(45) Date of publication and mention of the grant of the patent: **25.11.2026**
(21) Application number: 24700982.2
(22) Date of filing: 16.01.2024
(51) Int. Cl.: H04W 4/06, H04W 76/40, H04W 76/11

(54) **METHODS FOR MBS MULTICAST WITH CAPABILITY LIMITED UE**
VERFAHREN FÜR MBS-MULTICAST MIT KAPAZITÄTSBEGRENZTEM BENUTZERGERÄT
PROCÉDÉS DE MULTIDIFFUSION MBS AVEC UE À CAPACITÉ LIMITÉE

(30) Priority: 16.01.2023 US 202363439176 P
(43) Date of publication of application: 26.11.2025
(73) Proprietor: Telefonaktiebolaget LM Ericsson (publ), 164 83 Stockholm (SE)
(72) Inventor: VAN DER ZEE, Martin, 214 41 MALMÖ (SE); TIRRONEN, Tuomas, 00950 Helsinki (FI)
(74) Representative: Ericsson
(86) International application number: PCT/EP2024/050910
(87) International publication number: WO 2024/153632

(56) References cited:
- WO-A1-2022/087106
- US-A1- 2016 014 571
- ERICSSON: "MBS capabilities", vol. RAN WG2, no. eMeeting; 20220117 - 20220125, 11 January 2022 (2022-01-11), XP052094093, Retrieved from the Internet <URL:https://ftp.3gpp.org/tsg_ran/WG2_RL2/TSGR2_116bis-e/Docs/R2-2200979.zip R2-2200979 MBS capabilities.docx> [retrieved on 20220111]
- VIVO: "Discussion on UE capabilities for MBS", vol. RAN WG2, no. e-Meeting; 20220117 - 20220125, 11 January 2022 (2022-01-11), XP052094362, Retrieved from the Internet <URL:https://ftp.3gpp.org/tsg_ran/WG2_RL2/TSGR2_116bis-e/Docs/R2-2201261.zip R2-2201261 Discussion on UE capabilities for MBS.docx> [retrieved on 20220111]

## Description

### TECHNICAL FIELD

The present disclosure relates generally to communications, and more particularly to communication methods and related devices and nodes supporting wireless communications.

### BACKGROUND

### MBS

In 3GPP (3rd Generation Partnership Project) Rel-17, Multicast/Broadcast Service (MBS) is introduced which enables the network to send the same data to a (large) group of user equipments (UEs) efficiently. There are two ways to convey the data to the UE: MBS broadcast and MBS multicast. MBS broadcast is supported in all radio resource control (RRC) states. MBS multicast is supported in RRC_CONNECTED (Rel-17) and RRC_INACTIVE (Rel-18).

If the UE wants to receive multicast data the UE first has to join the multicast session (see TS 23.247 section 7.2.1.3). The UE is then authorized and may receive the security keys to decrypt the multicast data. To receive broadcast data the UE does not need to enter RRC_CONNECTED but the UE can remain in RRC_IDLE or RRC_INACTIVE and receive the configuration information to receive MBS broadcast via a session information block (SIB) and a multicast control channel (MCCH).

### Multicast session activation and MRB configuration

After the UE has joined the multicast session, the core network (CN) creates the session in the radio access network (RAN) (e.g., UE context). After the CN has activated the session in the RAN and resources are allocated, downlink multicast transmissions can start. The CN can also deactivate the session, e.g., when there is no multicast data for some time. For the MBS session states, see TS 23.247 section 4.1. In such case the RAN can decide to release the multicast UEs to RRC_IDLE or RRC_INACTIVE. When the session is activated again, the UEs will be paged and return to RRC_CONNECTED mode to continue multicast data reception.

When the multicast session is activated by the CN, the RAN will configure the UEs in RRC_CONNECTED mode (based on the information in the UE context, that the UE has joined the session), with a Multicast Radio Bearer (MRB) to enable the UE to receive the multicast data. UEs that have joined and are in RRC_IDLE/RRC_INACTIVE will be paged. Typically, a single MRB is configured for a multicast session, but in case multiple quality of Service (QoS) flows are associated with the multicast session, multiple MRBs may be configured.

### UE capabilities

Via UE capability signaling the UE indicates to RAN whether it supports MBS multicast (*dynamicMulticastPCell-r17*). The UE is required to be able to monitor at least one G-RNTI (group radio network temporary identifier). Optionally the UE can indicate to be able to monitor additional G-RNTIs (maxMRB-Add-r17). A UE is required to support up to 16 radio bearers (#DRBs), and a radio bearer can be a data radio bearer (DRB) or an MRB. This means that the number of MRBs that can be configured depends on the number of DRBs that is configured.

A UE supporting MBS broadcast is required to support at least one G-RNTI, and at least 4 MRBs.

### General MBS multicast capability:

▪ dynamicMulticastPCell-r17
▪ Indicates whether the UE supports dynamic scheduling for multicast for PCell comprised of the following functional components:
   - Supports group-common PDCCH/PDSCH with CRC scrambled by G-RNTI for PCell;
   - Supports CFR configuration for multicast;
   - Supports CORESET and common search space configuration for multicast;
   - Supports DCI format 4_1 with CRC scrambled with G-RNTI for multicast;
   - Supports inter-slot TDM between unicast PDSCH and group-common PDSCH in different slots;
   - Supports {2, 4, 8} times semi-static slot-level repetition for group-common PDSCH for multicast.

### Maximum number of additional MRBs:

| Parameter | Description | Value |
|---|---|---|
| #DRBs | The number of DRBs that a UE shall support. | 16 per UE, otherwise. NOTE 4 |
| NOTE 4: The value of parameter #DRBs defines the total number of multicast MRBs and DRBs, and the maximum number of split-MRBs is two. | | |

### maxMRB-Add-r17

Indicates the additional maximum number of MRBs that the UE supports for MBS multicast reception as specified in TS 38.331.

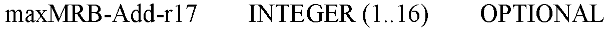

### Maximum number of G-RNTIs for multicast reception:

### maxNumberG-RNTI-r17

Defines maximum number of G-RNTIs for multicast. For TN, the UE shall set the capability value consistently for all FDD-FR1 bands, all TDD-FR1 bands and all TDD-FR2 bands, associated with supported shared and non-shared spectrum respectively. For NTN, UE shall set the capability value consistently for all FDD-FR1 NTN bands.

A UE supporting this feature shall also indicate support of *dynamicMulticastPCell-r17.*

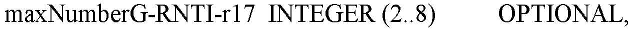

### MBS broadcast capability (not signaled to the gNB):

### Broadcast reception

It is optional for UE to support broadcast reception as specified in TS 38.331 [9]. A UE that supports the feature shall also support:
- Group-common PDCCH/PDSCH for broadcast with CRC scrambled by MCCH-RNTI;
- Group-common PDCCH/PDSCH for broadcast with CRC scrambled by G-RNTI(s) for MTCH;
- CFR configuration for broadcast;
- CORESET and common search space for broadcast;
- DCI format 4_0 with CRC scrambled with G-RNTI/MCCH-RNTI for broadcast;
- Inter-slot TDM between unicast PDSCH and MCCH group-common PDSCH or MTCH group-common PDSCH, or between MCCH group-common PDSCH and MTCH group-common PDSCH, or among unicast PDSCH and MCCH group-common PDSCH and MTCH group-common PDSCH in different slots;
- MCCH change notification indication via DCI;
- RRC configured slot-level repetition up to 8 for MTCH;
- One G-RNTI per UE is supported for broadcast reception;
- Support of FDMed MCCH and PBCH;
- Support of up to 64QAM for FR1/FR2;
- 4 broadcast MRBs as the minimum number;
- PDCP 12 bits SN;
- ROHC with profiles 0x0000, 0x0001 and 0x0002;
- 4 ROHC context sessions;
- RLC UM with 6 bits SN;
- RLC UM with 12 bits SN;
- DRX with long DRX cycle for MBS broadcast as specified in TS 38.321 [8].

### Reception of multiple MBS multicast sessions

The UE may be interested to receive multiple MBS session simultaneously e.g., a Public Safety UE that has joined more than one group and wants to stay in touch with all of them.

The UE can support MBS multicast, but only be capable to monitor only one G-RNTI. In theory the UE could not support additional MRBs and 16 DRBs can be configured,
which means that no MRB can be configured. However, this use case seems academic and is not considered further.

In case the network has configured multiple session onto the same G-RNTI, then a UE supporting a single G-RNTI could support multiple sessions.

If the gNB has mapped all sessions onto a single G-RNTI, then a UE that is only interested to receive a single session, will also receive the data of all the other sessions, but discard that data. This involves unnecessary reception of data that the UE is not interested in and may increase the UE power consumption.

### Multicast reception in RRC_INACTIVE

In Rel-18, the UE can be configured to receive MBS multicast in RRC_INACTIVE as well (e.g., when there is extreme congestion in RAN and RAN cannot accommodate all UEs in RRC_CONNECTED). The UE receives the PTM (point-to-multiple) configuration to use in RRC_INACTIVE via dedicated signaling when the UE was in RRC_CONNECTED, or via SIB and MCCH when the UE is in RRC_INACTIVE. In the latter case the MCCH includes a list of multicast sessions and their PTM configuration.

As an additional note, multicast reception in RRC_IDLE is not currently supported and not expected to be supported at least in Rel-18 specifications.

There currently exist certain challenge(s). For example, a UE may support MBS multicast, but the UE may only be able to receive one multicast session at a time. There is no limitation in the number of sessions a UE can join, and in case the UE joins two sessions but the UE only supports one G-RNTI, then the RAN will configure the UE with the G-RNTI of the session that is activated first. When the second session is activated, and the session is mapped onto a different G-RNTI, then the UE cannot be configured to receive session 2.

3GPP Draft Document R2-2200979, titled "MBS capabilities" of the same applicant and 3GPP Draft Document R2-2201261, titled "Discussion on UE capabilities for MBS" discuss broadband and multicast capability with respect to multiple G-RNTI.

WO2022/087106 A discloses a method in a user equipment (UE) for managing reception of multicast and/or broadcast services (MBS), wherein a UE transmits an MBS interest information message to a base station to indicate an MBS service in which the UE is interested. This message may include a temporary mobile group identity (TMGI) that identifies each MBS service.

US2016/014571 A discloses a communication system, wherein the UE sends a message including an indication of at least one frequency of interest and at least one alternative frequency of interest, wherein at least one frequency of interest is used to provide a set of multimedia broadcast multicast service (MBMS) services.

### SUMMARY

It is an object of the invention to overcome exemplary problems described above. This object is achieved by the independent claims. Advantageous embodiments are described in the dependent claims and by the following description.

Advantageously, these aspects provide that the UE can join multiple sessions, even when it cannot receive multiple sessions at the same time. In RRC_CONNECTED mode, the gNB reconfigures the UE (session switch) based on preference information from the UE. In RRC_INACTIVE mode when MCCH is configured by the gNB, the reconfiguration (session switch) is left to UE implementation.

### BRIEF DESCRIPTION OF THE DRAWINGS

The accompanying drawings, which are included to provide a further understanding of the disclosure and are incorporated in and constitute a part of this application, illustrate certain non-limiting embodiments of inventive concepts. In the drawings:
Figure 1 is a signaling diagram illustrating a UE attempting to join two multicast sessions but only supports one G-RNTI;
Figure 2 is a signaling diagram illustrating multicast session switching when a UE only supports one G-RNTI;
Figure 3 is a signaling diagram illustrating a UE sending a priority list when requested or when the UE wants to change to a different multicast session according to some embodiments.
Figures 4A-6 are flowcharts illustrating operations of a UE according to some embodiments;
Figures 7-8 are flowcharts illustrating operations of a network node according to some embodiments;
   some embodiments;
Figure 9 is a signaling diagram illustrating a UE configuring itself to join multicast sessions based on acquired MRB configurations according to some embodiments;
Figures 10A-11 are flow charts illustrating operations of a UE according to some embodiments;
Figure 12 is a flow chart illustrating operations of a network node according to some embodiments;
Figure 13 is a block diagram of a communication system in accordance with some embodiments;
Figure 14 is a block diagram of a user equipment in accordance with some embodiments
Figure 15 is a block diagram of a network node in accordance with some embodiments;
Figure 16 is a block diagram of a host computer communicating with a user equipment in accordance with some embodiments;
Figure 17 is a block diagram of a virtualization environment in accordance with some embodiments; and
Figure 18 is a block diagram of a host computer communicating via a base station with a user equipment over a partially wireless connection in accordance with some embodiments in accordance with some embodiments.

### DETAILED DESCRIPTION

Some of the embodiments contemplated herein will now be described more fully with reference to the accompanying drawings. Embodiments are provided by way of example to convey the scope of the subject matter to those skilled in the art, in which examples of embodiments of inventive concepts are shown. Inventive concepts may, however, be embodied in many different forms and should not be construed as limited to the embodiments set forth herein. Rather, these embodiments are provided so that this disclosure will be thorough and complete, and will fully convey the scope of present inventive concepts to those skilled in the art. It should also be noted that these embodiments are not mutually exclusive. Components from one embodiment may be tacitly assumed to be present/used in another embodiment.

### Reception of multiple MBS broadcast sessions

The UE in RRC_IDLE or RRC_INACTIVE can acquire the MRB configurations for the active MBS broadcast sessions from the MCCH. Dependent on the UE capability, the UE can configure multiple MRBs at the same time or one MRB at a time. When the UE configures another MRB, i.e., enables the reception of another broadcast session, there is no signaling between the UE and network.

When the UE goes to RRC_CONNECTED, the UE can indicate via a *MBSInterestIndication* message on which frequencies it is interested to receive MBS broadcast sessions. The frequencies are signaled in priority order to indicate which frequencies are the most interesting for the UE. The gNB can use this information to configure MBS broadcast reception on PCell or SCell and take into account the different band combinations the UE support, while optimizing the gNB resource usage. The UE can also indicate a list of MBS broadcast sessions the UE is interested to receive, again in priority order. The gNB can use this information for scheduling purposes (e.g., to avoid scheduling unicast and broadcast data in the same slot when the UE does not support simultaneous reception of unicast and broadcast in the same slot).

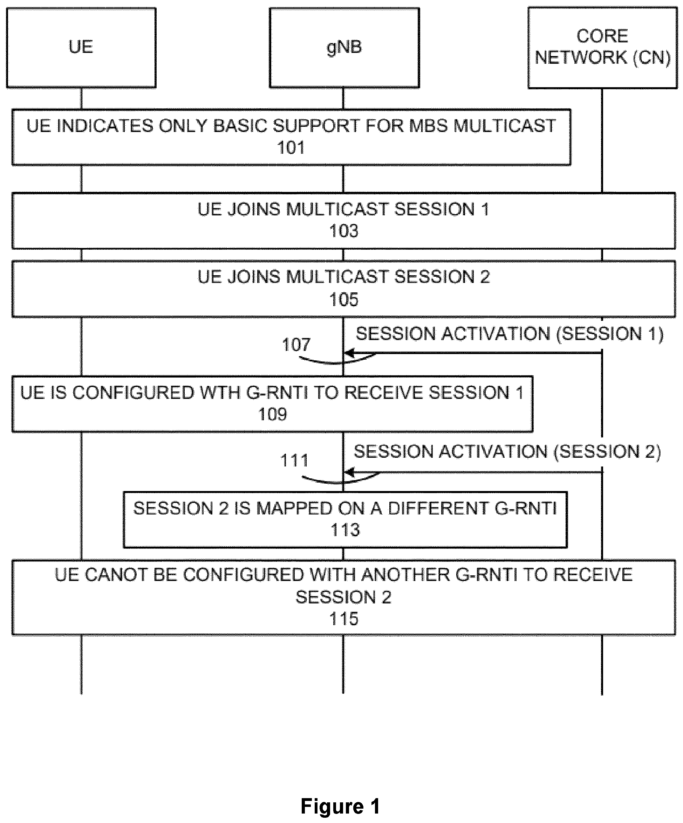

As previously indicated, a UE may support MBS multicast, but the UE may only be able to receive one multicast session at a time. There is no limitation in the number of sessions a UE can join, and in case the UE joins two sessions but the UE only supports one G-RNTI, then the RAN will configure the UE with the G-RNTI of the session that is activated first. When the second session is activated, and the session is mapped onto a different G-RNTI, then the UE cannot be configured to receive session 2. This is illustrated in Figure 1, where in block 101, the UE indicates only basis support for MBS multicast. In other words, the UE indicates it can receive MBS multicast.

In block 103 and 105, the UE joins multicast session 1 and multicast session 2, respectively, sent from the CN. In block 107, the CN transmits a session activation for session 1 to the gNB. The gNB configures the UE with a G-RNTI to receive session 1 in block 109.

In block 111, the CN transmits a session activation for session 2 to the gNB. The gNB maps session 2 on a different G-RNTI. In block 113, the UE cannot be configured with another G-RNTI to receive session 2.

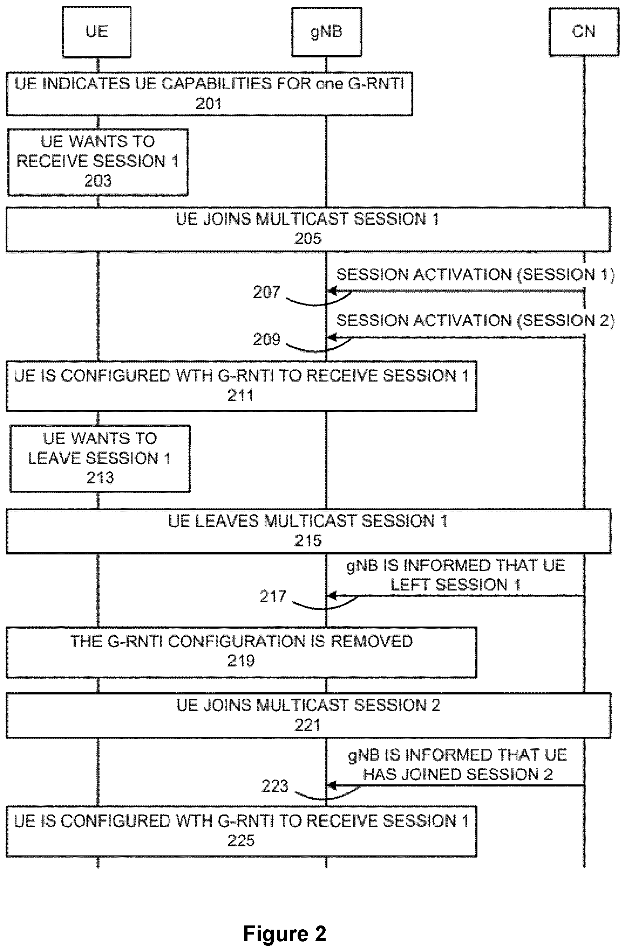

In case the UE would like to switch between sessions, then the UE needs to leave the current session and join the new session. In S2-2300166 a signaling optimization is proposed where the UE can leave the old session and join a new session in a single signaling message. The reason that the UE cannot receive multiple sessions at the same time can be because the UE only has limited RAN related UE capabilities to support MBS multicast (e.g., only supports one G-RNTI and the RAN decides the map sessions onto different G-RNTIs). This procedure involves delay and introduces signaling between the UE and the CN. This is illustrated in Figure 2.

Turning to Figure 2, in block 201, the UE indicates in UE capabilities support for 1 MRB. In block 203, the UE determines it wants to receive multicast session 1 and joins multicast session 1 in block 205. In block 207, the CN transmits a session activation for multicast session 1 to the gNB. In block 209, the CN transmits a session activation for multicast session 2 to the gNB 302.

In block 211, the gNB configures the G-RNTI configuration for UE to receive multicast session 1.

In block 213, the UE determines it wants to receive multicast session 2. In block 213, the UE leaves multicast session 1. The CN transmits an indication to inform the gNB that the UE left multicast session 1 in block 217. In block 219, the gNB removes the G-RNTI configuration.

In block 221, the UE joins multicast session 2. In block 223, the CN transmits an indication to the gNB that the UE has joined multicast session 2.

To overcome the above limitations, some embodiments of the present embodiment enable the UE to join multiple multicast sessions, even when the UE cannot receive multiple multicast sessions at the same time.

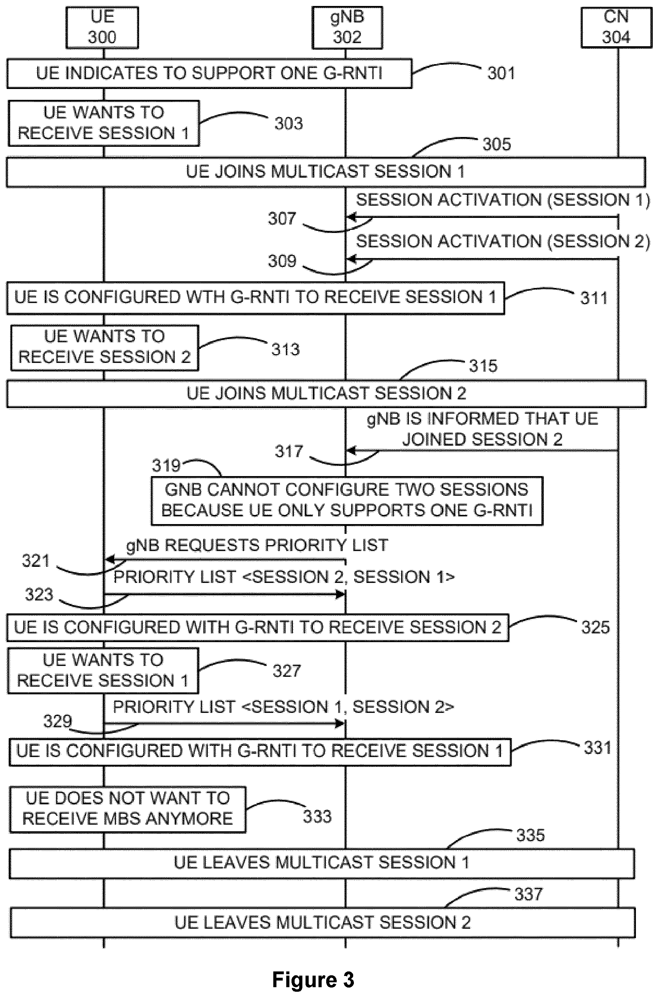

Figure 3 is a signaling diagram illustrating signaling flow between the UE 300, the gNB 302, and the CN 304 in embodiments where the gNB 302 does not implement an MCCH with a list of multicast sessions with PTM configurations. The UE 300 in its simplest form has at least one processor, a memory coupled to the processor storing program code or instructions that when executed by the at least one processor cause the UE 300 to perform operations. The UE 300 also has a network interface to communicate with other UEs and network components.

The gNB 302 in its simplest form has at least one processor, a memory coupled to the processor storing program code or instructions that when executed by the at least one processor cause the gNB 302 to perform operations. The gNB 302 also has a network interface to communicate with UEs and other network components.

The CN 304 in its simplest form has at least one processor, a memory coupled to the processor storing program code or instructions that when executed by the at least one processor cause the CN 304 to perform operations. The CN 304 also has a network interface to communicate with UEs and other network components.

In some embodiments where MCCH (multicast control channel) is not enabled by the gNB 302, when the UE 300 is in RRC_CONNECTED, the gNB 302 can request the UE 300 to send a prioritized list of multicast sessions the UE 300 has joined. The gNB 302 can use this list to configure the UE 300 with another multicast session when the UE 300 is capability limited. The UE 300 can also send an updated priority list when it wants to switch to another multicast session.

When the UE 300 is in RRC_INACTIVE and the gNB 302 has configured the MCCH that includes the MRB configuration for a list of multicast sessions, then it can be left to UE implementation which MRB(s) the UE 300 configures for the multicast sessions the UE 300 has joined.

In some embodiments, the gNB 302 does not implement an MCCH with a list of multicast sessions with PTM configurations. In these embodiments, the gNB 302 can request the UE 300 what it prefers to receive e.g., when the gNB 302 cannot configure the UE 300 with all the sessions the UE 300 has joined.

In one example, the request is made using a dedicated RRC message specified for this purpose, signaled from the gNB 302 to the UE 300. The UE 300 replies with a prioritized list of sessions that the UE 300 has joined.

Turning to Figure 3, in block 301, the UE 300 transmits an indication to the gNB 302 of a number (i.e., how many) G-RNTIs that the UE 302 supports. For example, the UE may transmit an indication that the UE supports only one G-RNTI. In the description that follows and as illustrated in Figure 3, the number shall be one (i.e., the UE supports only one G-RNTI). In block 303, the UE 300 (e.g., the user of the UE 300) determines the UE 300 wants to receive multicast session 1. In block 305, the UE 300 joins multicast session 1.

In block 307, the CN 304 transmits a session activation for multicast session 1 to the gNB 302. In block 309, the CN 304 transmits a session activation for multicast session 2 to the gNB 302. The CN 304 may transmit additional session activations to the gNB 302 for additional multicast sessions.

The gNB 302 configures the UE 300 with G-RNTI to receive multicast session 1 in block 311.

In block 313, the UE 300 (e.g., the user of the UE 300) determines the UE 300 wants to receive multicast session 2. In block 315, the UE 300 joins multicast session 2.

In block 317, the CN 304 transmits an indication to the gNB 302 that the UE 300 has joined multicast session 2.

In block 319, the gNB 302, based on the indication from the UE 300 that the UE 300 supports one G-RNTI, cannot configure two multicast sessions because the UE 300 only supports one G-RNTI. The gNB 302 transmits a message requesting a priority list from the UE 300 in block 321. It is up to the gNB implementation, whether and when to request the UE preferences, and how to handle the preferences when received (e.g., the gNB 302 could configure as many multicast sessions down the list that the UE capabilities allow) For example, if the UE supports three G-RNTIs (i.e., the number is three), then the gNB 302 could configure three multicast sessions for the UE 300 before using any priority list.

The UE 300 receives the request and responsive to receiving the request, determines and transmits a priority list (e.g., multicast session 2, multicast session 1>) to the gNB 302 in block 323. In one example the "Priority list" is specified and signaled (e.g., as an information element) in a dedicated RRC message from the UE 300 to the gNB 302 (e.g., a *MBSInterestIndication* message). In another example, the "Priority list" is signaled in an uplink transmission during a SDT (small data transmission) procedure from the UE 300 to the gNB 302.

In some embodiments, the UE 300 shall not send a priority list when not requested or when the gNB 302 indicates not to support this feature. For example, the gNB 302 signals in system information (e.g., SIB20) whether the gNB 302 supports the request and reply of the priority lists. In an alternative example, the gNB 302 does not provide any information in the In system information regarding the feature but the UE 300 will explicitly know the gNB 302 supports the priority list based on the request message the UE 300 received from the gNB 302.

In block 325, the GNB 302 transmits a G-RNTI configuration to the UE 300 to receive multicast session 2. It is up to gNB implementation when a session that is configured in the UE 300 and the session is deactivated to configure another (prioritized) session that the UE 300 has joined.

The UE 300 can send an updated priority list when the UE 300 wants to switch session. This is illustrated by the UE 300 (e.g., the user of the UE 300) determining that the UE 300 wants to receive multicast session 1 in block 327 and the UE 300 transmitting an updated priority list (e.g., <multicast session 1, multicast session 2>) to the gNB 302 in block 329.

The gNB 302 transmits a G-RNTI configuration to the UE 300 to receive multicast session 1 in block 331.

In block 333, the UE 300 (e.g., the user of the UE 300) deciding the UE 300 does not want to receive multicast sessions anymore.

In block 335, the UE 300 leaves multicast session 1. In block 337, the UE leaves multicast session 2.

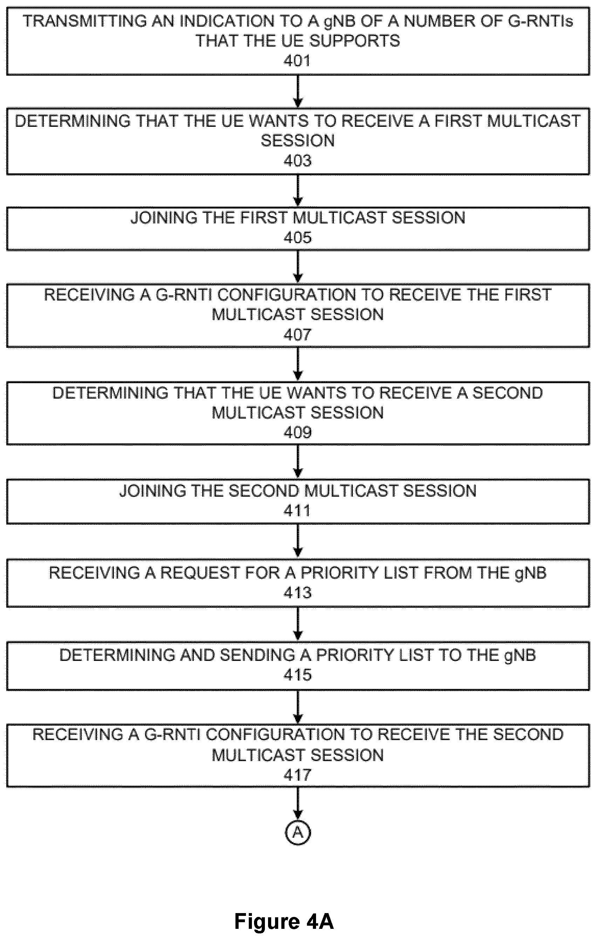

Figure 4A illustrates operations from the perspective of the UE in the signaling diagram. Turning to Figure 4A, in block 401, the UE 300 transmits an indication to a gNB 302 of a number of group-radio network temporary identifiers, G-RNTIs that the UE 300 supports. In block 403, the UE 300 determines that the UE 300 wants to receive a first multicast session. This could be based on a calendar on the UE 300, a message received from another UE, an indication from a user of the UE 300, etc.

In block 405, the UE 300 joins the first multicast session. In block 407, the UE 300 receives a G-RNTI configuration to receive the first multicast session.

In block 409, the UE 300 determines that the UE wants to receive a second multicast session. For example, the UE 300 may receive an indication from the user of the UE 300 to receive the second multicast session.

In block 413, the UE 300 receives a request for a priority list from the gNB 302. Responsive to receiving the request, the UE 300 determines and transmits a priority list to the gNB 302 in block 415. The UE 300 knows that the second multicast session is the first listing in the priority list and the first multicast session is below the second multicast session. There may be other multicast sessions between the second multicast session and the first multicast session. In some embodiments, the UE 300 may receive an indication from the user of the UE 300 to determine the priority.

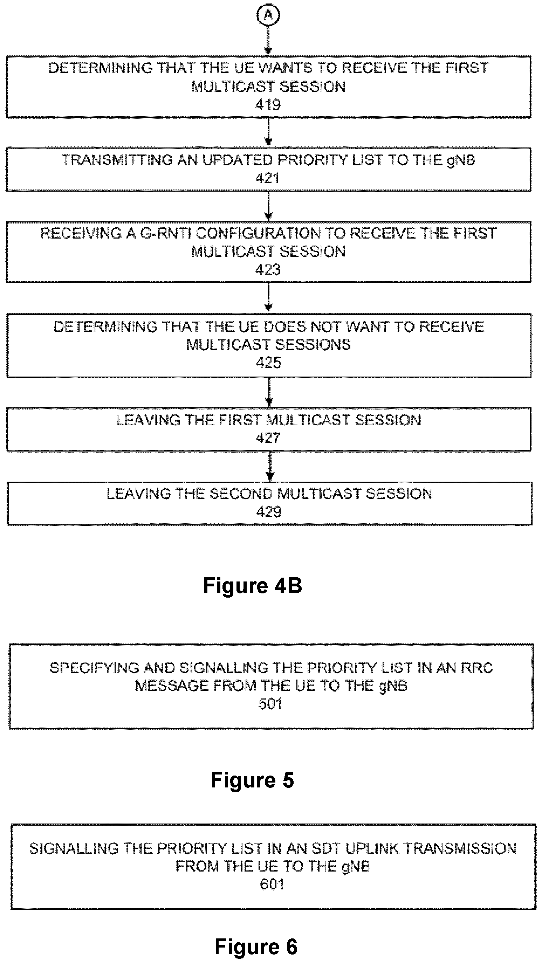

As illustrated by block 501 of Figure 5, the UE 300 specifies the priority list and signals the priority list (e.g., as an information element) in a dedicated radio resource control, RRC, message from the UE 300 to the gNB 302 (e.g., a *MBSInterestIndication* message). In another example as illustrated in block 601 of Figure 6, the UE signals the "Priority list" in an uplink transmission during a SDT (small data transmission) procedure from the UE 300 to the gNB 302.

Returning to Figure 4A, in block 417, the UE 300 receives a G-RNTI configuration to receive the second multicast session.

In Figure 4B, in block 419, the UE 300 determines that the UE 300 wants to receive the first multicast session. This could be based on a calendar on the UE 300, a message received from another UE, an indication from a user of the UE 300, etc.

In block 421, the UE 300 updates the priority list and transmits the updated priority list to the gNB 302.

In block 423, the UE 300 receives a G-RNTI configuration to receive the first multicast session.

In block 425, the UE 300 determines that the UE 300 does not want to receive multicast sessions. This could be based on a calendar on the UE 300, a message received from another UE, an indication from a user of the UE 300, etc. In block 427, the UE 300 leaves the first multicast session. In block 429, the UE 300 leaves the second multicast session.

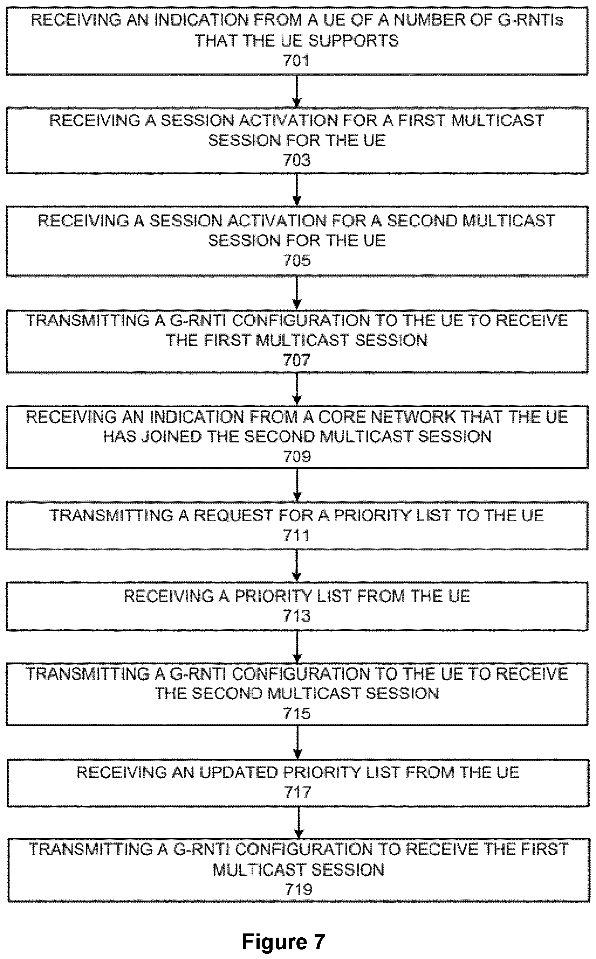

Figure 7 illustrates operations from the perspective of the gNB in the signaling diagram. Turning to Figure 7, in block 701, the gNB 302 receives an indication from a UE 300 of a number of group-radio network temporary identifiers, G-RNTIs that the UE 300 supports. For example, the indication may indicate that the UE supports only one G-RNTI. In the description that follows, the number shall be one (i.e., the UE supports only one G-RNTI).

In block 703, the gNB 302 receives a session activation for a first multicast session for the UE 300. In block 705, the gNB 302 receives a session activation for a second multicast session for the UE 300. The gNB 302 may receive additional session activations from the CN 304 for additional multicast sessions.

In block 707, the gNB 302 transmits a G-RNTI configuration to the UE 300 to receive the first multicast session.

In block 709, the gNB 302 receives an indication from a core network 304 that the UE 300 has joined the second multicast session.

In block 711, the gNB 101 transmits a request for a priority list to the UE 300. This is done because the gNB 302 previously received the indication that the UE 300 supports only one G-RNTI. In scenarios where the indication indicates the number is greater than one, the gNB may wait to transmit the request for the priority list until the number of multicast sessions the UE has joined is the same number as the number of G-RNTIs that the UE supports. In block 713, the gNB 302 receives a priority list from the UE 300.

In block 715, the gNB 302 transmits a G-RNTI configuration to the UE to receive the second multicast session.

In block 717, the gNB 302 receives an updated priority list from the UE 300. The priority list has the first multicast session as the first listing. Thus, in block 719, the gNB 302 transmits a G-RNTI configuration to the UE 300 to receive the first multicast session.

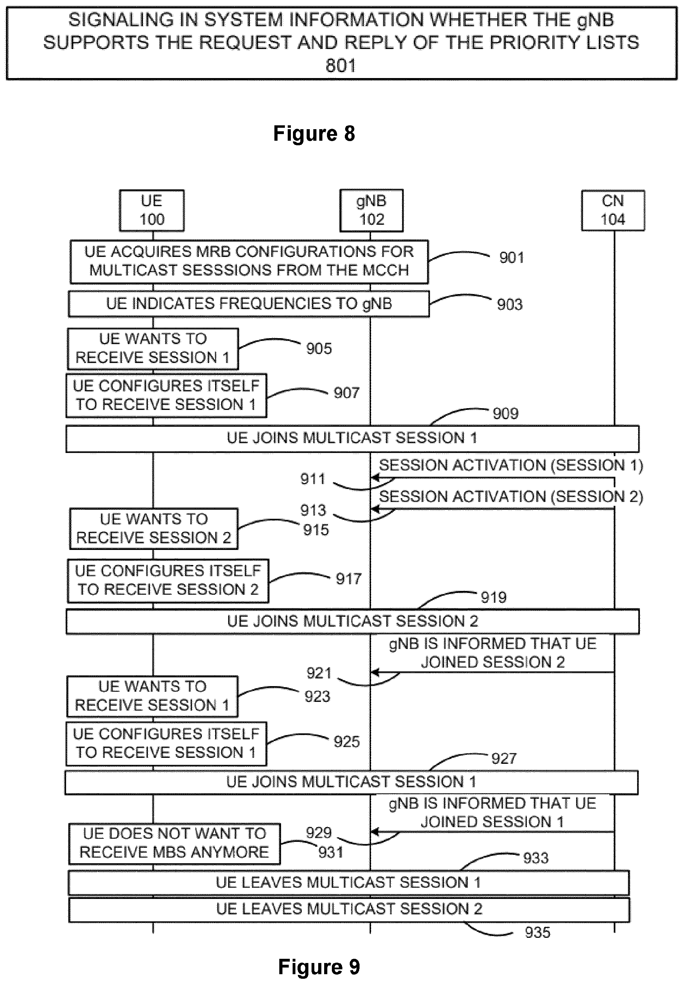

In some embodiments, the gNB 302 may not use a priority list. In these situations, the gNB 302 signals the UE 300 whether the gNB 302 uses a priority list. This is illustrated in block 801 of Figure 8 where the gNB 302 signals in system information whether it supports the request and reply of the priority lists.

In some embodiments, when a multicast session is deactivated by the CN 104, (i.e., there is no DL multicast transmissions for this session until the session is activated again):
- In case the latest Priority List received from the UE 300 includes the session that is deactivated, the gNB considers the priority as deactivated (e.g., the gNB 302 may consider the session to have the lowest priority and reconfigure the UE 300 with another session).
- In case the latest Priority List received from the UE 300 includes the session that is activated again and the priority is deactivated, the gNB 302 considers the priority as activated (e.g., the gNB 302 may consider the session to have the latest priority signaled by the UE 300 and reconfigure the UE 300 with that session again).

In other embodiments, the gNB 302 supports the use of the MCCH with a list of multicast session with PTM configurations. The UE 300 in RRC_IDLE or RRC_INACTIVE can acquire the MRB configurations for the active MBS multicast sessions from the MCCH. Dependent on the UE capability, the UE 300 can configure multiple MRBs at the same time or one MRB at a time. When the UE configures another MRB, i.e., enables the reception of another multicast session, there is no signaling between the UE and network.

When the UE 300 goes to RRC_CONNECTED the UE 300 can indicate via MBSInterestIndication message on which frequencies the UE 300 is interested to receive MBS multicast sessions. The frequencies are signaled in priority order to indicate which frequencies are the most interesting for the UE 300. The gNB 302 can use this information to configure MBS broadcast reception on the primary cell (PCell) or a secondary cell (SCell) and take into account the different band combinations the UE 300 supports, while optimizing the gNB resource usage. The UE 300 can also indicate a list of MBS multicast sessions the UE 300 is interested to receive, again in priority order. The gNB 302 can use this information for scheduling purposes (e.g., to avoid scheduling unicast and broadcast data in the same slot when the UE 300 does not support simultaneous reception of unicast and broadcast in the same slot).

Figure 9 is a signaling diagram illustrating signaling flow between the UE 300, the gNB 302, and the CN304 in embodiments where the gNB 302 has implemented an MCCH with a list of multicast sessions with PTM configurations.

Turning to Figure 9, in block 901, the UE 300 acquires multicast radio bearer, MRB, configurations for a plurality of active multicast/broadcast service, MBS, multicast sessions from the multicast control channel, MCCH.

In block 903, the UE 300 transmits an indication to the gNB 302 indicating which frequencies the UE 300 is interested to receive MBS multicast sessions. For example, when the UE 300 goes to RRC_CONNECTED the UE 300 can indicate via a *MBSInterestIndication* message on which frequencies it is interested to receive MBS broadcast/multicast sessions. The frequencies are signaled in priority order to indicate which frequencies are the most interesting for the UE 300. The gNB 302 can use this information to configure MBS broadcast/multicast reception on the PCell or SCell and take into account the different band combinations the UE 300 supports, while optimizing the gNB resource usage. The UE 300 can also indicate a list of MBS broadcast sessions the UE is interested to receive, again in priority order. The gNB 302 can use this information for scheduling purposes (e.g., to avoid scheduling unicast and broadcast data in the same slot when the UE 300 does not support simultaneous reception of unicast and broadcast in the same slot).

In block 905, the UE 300 determines that the UE 300 wants to receive a first multicast session from the plurality of active MBS multicast sessions. This could be based on a calendar on the UE 300, a message received from another UE, an indication from a user of the UE 300, etc.

In block 907, the UE 300 configures itself to receive a first multicast session based on the MRB configurations acquired. For example, the UE 300 can configure itself with a G-RNTI configuration to receive the first multicast session.

In block 909, the UE 300 joins the first multicast session.

In block 911, the CN 304 transmits a session activation to the gNB 302 for the first multicast session. In block 913, the CN 304 transmits a session activation to the gNB 302 for the second multicast session. The CN 304 may transmit additional session activations to the gNB 302 for additional multicast sessions.

In block 915, UE 300 determines that the UE 300 wants to receive a second multicast session from the plurality of active MBS multicast sessions. This could be based on a calendar on the UE 300, a message received from another UE, an indication from a user of the UE 300, etc.

In block 917, the UE 300 configures itself to receive the second multicast session based on the MRB configurations acquired. For example, the UE 300 can configure itself with a G-RNTI configuration to receive the second multicast session. In block 919, the UE 300 joins the second multicast session.

In block 921, the CN 304 transmits a message to the gNB 302 informing the gNB 302 that the UE 300 has joined the second multicast session.

In block 923, the UE 300 determines that the UE 300 wants to receive the first multicast session from the plurality of active MBS multicast sessions. This could be based on a calendar on the UE 300, a message received from another UE, an indication from a user of the UE 300, etc.

In block 925, configures itself to receive the second multicast session based on the MRB configurations acquired. For example, the UE 300 can configure itself with a G-RNTI configuration to receive the second multicast session. In block 927, the UE 300 joins the second multicast session.

In block 929, the CN 304 transmits a message to the gNB 302 informing the gNB 302 that the UE 300 has joined the first multicast session.

In block 931, the UE 300 determines that the UE 300 does not want to receive multicast sessions. This could be based on a calendar on the UE 300, a message received from another UE, an indication from a user of the UE 300, etc. In block 933, the UE 300 leaves the first multicast session. In block 935, the UE 300 leaves the second multicast session.

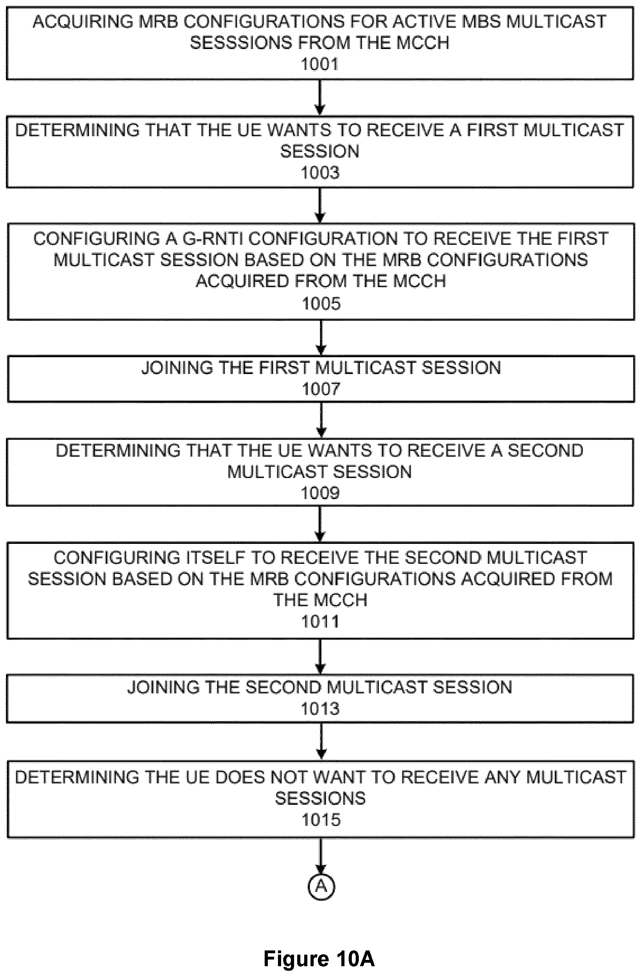

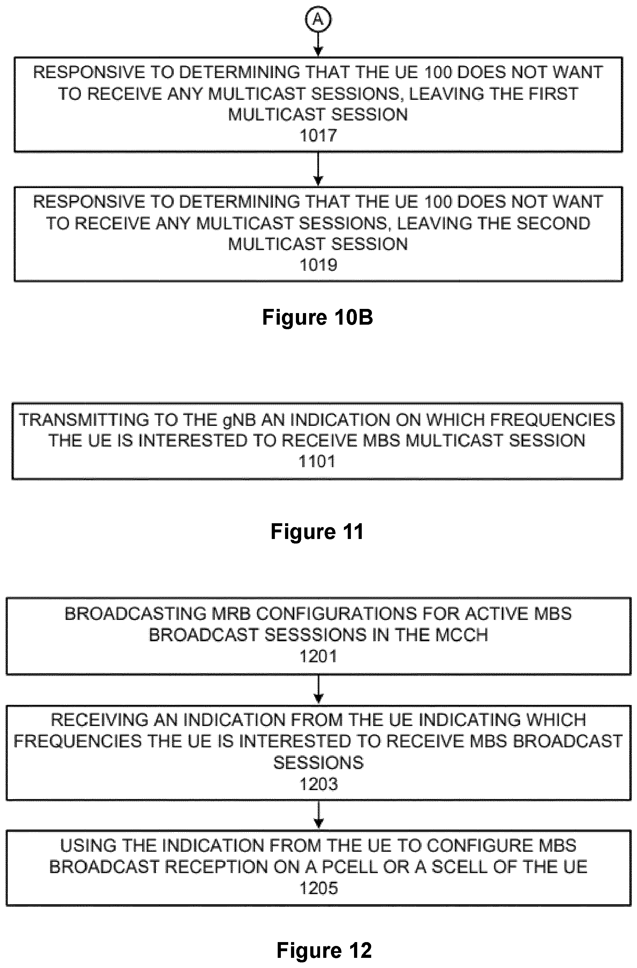

Figure 10 illustrates operations of Figure 9 from the perspective of the UE 300 of acquiring configurations from the MCCH.

Turning to Figure 10, in block 1001, the UE 300 acquires multicast radio bearer, MRB, configurations for a plurality of active multicast/broadcast service, MBS, multicast sessions from a multicast control channel, MCCH. It is left to UE implementation to decide which session(s) to configure from the list of MBS multicast sessions in the MCCH when the UE 300 is in RRC_INACTIVE. A UE 300 in RRC_CONNECTED can also acquire the MCCH and do the MRB configuration itself based on the MCCH information.

In block 1003, the UE 300 determines that the UE 300 wants to receive a first multicast session from the plurality of active MBS multicast sessions. This could be based on a calendar on the UE 300, a message received from another UE, an indication from a user of the UE 300, etc.

In block 1005, the UE 300 configures itself to receive a first multicast session based on the MRB configurations acquired. For example, the UE 300 can configure itself with a G-RNTI configuration to receive the first multicast session.

In block 1007, the UE 300 joins the first multicast session.

In block 1009, the UE 300 determines that the UE 300 wants to receive a second multicast session from the plurality of active MBS multicast sessions. This could be based on a calendar on the UE 300, a message received from another UE, an indication from a user of the UE 300, etc.

In block 1011, the UE 300 configures itself to receive the second multicast session based on the MRB configurations acquired. For example, the UE 300 can configure itself with a G-RNTI configuration to receive the second multicast session. In block 1013, the UE 300 joins the second multicast session.

In block 1015, the UE 300 determines that the UE 300 does not want to receive multicast sessions. This could be based on a calendar on the UE 300, a message received from another UE, an indication from a user of the UE 300, etc. In block 1017, responsive to determining that the UE 300 does not want to receive any multicast sessions, the UE 300 leaves the first multicast session. In block 1019, responsive to determining that the UE 300 does not want to receive any multicast sessions, the UE 300 leaves the second multicast session.

In some embodiments as illustrated in block 1101 of Figure 11, the UE 300 in block 1003 transmits an indication to the gNB 302 indicating which frequencies the UE 300 is interested to received MBS multicast sessions.

Figure 12 illustrates operations of Figure 9 from the perspective of the gNB 302 of acquiring configurations from the MCCH.

Turning to Figure 12, in block 1201, the gNB 302 broadcasts multicast radio bearer, MRB, configurations for a plurality of active multicast/broadcast service, MBS, multicast sessions in a multicast control channel, MCCH. In some embodiments, the gNB 302 maps all multicast sessions onto the same G-RNTI, i.e., a UE supporting only the minimum multicast capabilities is able to receive multiple sessions at the same time. In other embodiments, the gNB 302 maps the Multicast sessions of a specific feature onto the same G-RNTI (e.g., Public Safety, i.e., a Public Safety UE is likely to be interested in (all) Public Safety sessions). In another embodiment, the gNB 302 maps sessions for a certain use case (e.g., mission critical) onto the same G-RNTI e.g., based on quality of service (QoS) information (such as a QCI (QoS class identifier) value)
In block 1203, the gNB 302 receives an indication from the UE 300 indicating which frequencies the UE 300 is interested to received MBS multicast sessions. The frequencies can be signaled in priority order to indicate which frequencies are the most interesting for the UE 300. The gNB 302 can use this information to configure MBS broadcast reception on PCell or SCell and take into account the different frequency band combinations the UE 300 supports, while optimizing the gNB resource usage. The UE 300 can also indicate a list of MBS broadcast sessions the UE 300 is interested to receive, again in priority order. The gNB 302 can use this information for scheduling purposes (e.g., to avoid scheduling unicast and broadcast data in the same slot when the UE 300 does not support simultaneous reception of unicast and broadcast in the same slot).

In bock 1205, the gNB 302 uses the indication from the UE 300 to configure MBS broadcast reception on a primary cell, PCell, of the UE 300 or a secondary cell, SCell, of the UE 300.

As can be seen from the foregoing, the UE 300 can join multiple multicast sessions, even when the UE 300 cannot receive multiple multicast sessions at the same time. When the UE is in RRC_CONNECTED mode when the MCCH is not configured, the gNB 302 reconfigures the UE 300 (i.e., a session switch) based on preference information from the UE 302. When the UE is in RRC_CONNECTED mode or in RRC_INACTIVE mode when the MCCH is configured, the reconfiguration (session switch) is left to UE implementation. There is no signaling impact on the CN because the UE frequently joins or leaves a session, because it cannot receive multicast sessions simultaneously and it wants to receive another session. Furthermore, the switching is quicker because only RAN signaling is involved (the old MRB can be de-configured and a new MRB can be configured in a single RRCReconfiguration message). There is no signaling impact when the UE receives multicast in RRC_INACTIVE and MCCH is configured.

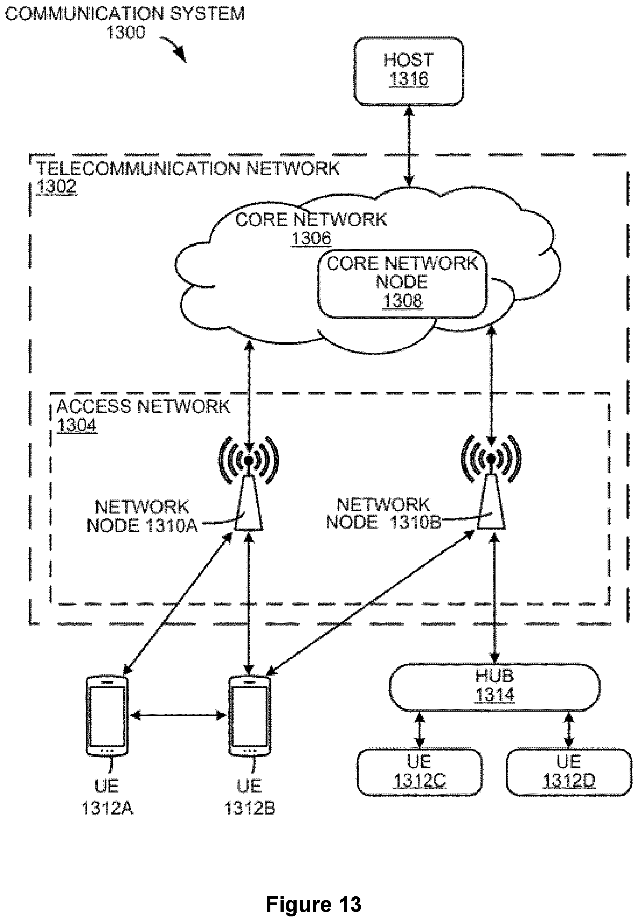

Figure 13 shows an example of a communication system 1300 in accordance with some embodiments.

In the example, the communication system 1300 includes a telecommunication network 1302 that includes an access network 1304, such as a radio access network (RAN), and a core network 1306, which includes one or more core network nodes 1308. The access network 1304 includes one or more access network nodes, such as network nodes 1310A and 1310B (one or more of which may be generally referred to as network nodes 1310), or any other similar 3^{rd} Generation Partnership Project (3GPP) access node or non-3GPP access point. The network nodes 1310 facilitate direct or indirect connection of user equipment (UE), such as by connecting UEs 1312A, 1312B, 1312C, and 1312D (one or more of which may be generally referred to as UEs 1312) to the core network 1306 over one or more wireless connections.

Example wireless communications over a wireless connection include transmitting and/or receiving wireless signals using electromagnetic waves, radio waves, infrared waves, and/or other types of signals suitable for conveying information without the use of wires, cables, or other material conductors. Moreover, in different embodiments, the communication system 1300 may include any number of wired or wireless networks, network nodes, UEs, and/or any other components or systems that may facilitate or participate in the communication of data and/or signals whether via wired or wireless connections. The communication system 1300 may include and/or interface with any type of communication, telecommunication, data, cellular, radio network, and/or other similar type of system.

The UEs 1312 may be any of a wide variety of communication devices, including wireless devices arranged, configured, and/or operable to communicate wirelessly with the network nodes 1310 and other communication devices. Similarly, the network nodes 1310 are arranged, capable, configured, and/or operable to communicate directly or indirectly with the UEs 1312 and/or with other network nodes or equipment in the telecommunication network 1302 to enable and/or provide network access, such as wireless network access, and/or to perform other functions, such as administration in the telecommunication network 1302.

In the depicted example, the core network 1306 connects the network nodes 1310 to one or more hosts, such as host 1316. These connections may be direct or indirect via one or more intermediary networks or devices. In other examples, network nodes may be directly coupled to hosts. The core network 1306 includes one more core network nodes (e.g., core network node 1308) that are structured with hardware and software components. Features of these components may be substantially similar to those described with respect to the UEs, network nodes, and/or hosts, such that the descriptions thereof are generally applicable to the corresponding components of the core network node 1308. Example core network nodes include functions of one or more of a Mobile Switching Center (MSC), Mobility Management Entity (MME), Home Subscriber Server (HSS), Access and Mobility Management Function (AMF), Session Management Function (SMF), Authentication Server Function (AUSF), Subscription Identifier De-concealing function (SIDF), Unified Data Management (UDM), Security Edge Protection Proxy (SEPP), Network Exposure Function (NEF), and/or a User Plane Function (UPF).

The host 1316 may be under the ownership or control of a service provider other than an operator or provider of the access network 1304 and/or the telecommunication network 1302, and may be operated by the service provider or on behalf of the service provider. The host 1316 may host a variety of applications to provide one or more service. Examples of such applications include live and pre-recorded audio/video content, data collection services such as retrieving and compiling data on various ambient conditions detected by a plurality of UEs, analytics functionality, social media, functions for controlling or otherwise interacting with remote devices, functions for an alarm and surveillance center, or any other such function performed by a server.

As a whole, the communication system 1300 of Figure 13 enables connectivity between the UEs, network nodes, and hosts. In that sense, the communication system may be configured to operate according to predefined rules or procedures, such as specific standards that include, but are not limited to: Global System for Mobile Communications (GSM); Universal Mobile Telecommunications System (UMTS); Long Term Evolution (LTE), and/or other suitable 2G, 3G, 4G, 5G standards, or any applicable future generation standard (e.g., 6G); wireless local area network (WLAN) standards, such as the Institute of Electrical and Electronics Engineers (IEEE) 802.11 standards (WiFi); and/or any other appropriate wireless communication standard, such as the Worldwide Interoperability for Microwave Access (WiMax), Bluetooth, Z-Wave, Near Field Communication (NFC) ZigBee, LiFi (Light Fidelity), and/or any low-power wide-area network (LPWAN) standards such as LoRa (Long Range) and Sigfox.

In some examples, the telecommunication network 1302 is a cellular network that implements 3GPP standardized features. Accordingly, the telecommunications network 1302 may support network slicing to provide different logical networks to different devices that are connected to the telecommunication network 1302. For example, the telecommunications network 1302 may provide Ultra Reliable Low Latency Communication (URLLC) services to some UEs, while providing Enhanced Mobile Broadband (eMBB) services to other UEs, and/or Massive Machine Type Communication (mMTC)/Massive IoT (Internet of Things) services to yet further UEs.

In some examples, the UEs 1312 are configured to transmit and/or receive information without direct human interaction. For instance, a UE may be designed to transmit information to the access network 1304 on a predetermined schedule, when triggered by an internal or external event, or in response to requests from the access network 1304. Additionally, a UE may be configured for operating in single- or multi-RAT or multi-standard mode. For example, a UE may operate with any one or combination of Wi-Fi, NR (New Radio) and LTE, i.e., being configured for multi-radio dual connectivity (MR-DC), such as E-UTRAN (Evolved-UMTS Terrestrial Radio Access Network) New Radio - Dual Connectivity (EN-DC).

In the example, the hub 1314 communicates with the access network 1304 to facilitate indirect communication between one or more UEs (e.g., UE 1312C and/or 1312D) and network nodes (e.g., network node 1310B). In some examples, the hub 1314 may be a controller, router, content source and analytics, or any of the other communication devices described herein regarding UEs. For example, the hub 1314 may be a broadband router enabling access to the core network 1306 for the UEs. As another example, the hub 1314 may be a controller that sends commands or instructions to one or more actuators in the UEs. Commands or instructions may be received from the UEs, network nodes 1310, or by executable code, script, process, or other instructions in the hub 1314. As another example, the hub 1314 may be a data collector that acts as temporary storage for UE data and, in some embodiments, may perform analysis or other processing of the data. As another example, the hub 1314 may be a content source. For example, for a UE that is a VR headset, display, loudspeaker or other media delivery device, the hub 1314 may retrieve VR assets, video, audio, or other media or data related to sensory information via a network node, which the hub 1314 then provides to the UE either directly, after performing local processing, and/or after adding additional local content. In still another example, the hub 1314 acts as a proxy server or orchestrator for the UEs, in particular in if one or more of the UEs are low energy IoT devices.

The hub 1314 may have a constant/persistent or intermittent connection to the network node 1310B. The hub 1314 may also allow for a different communication scheme and/or schedule between the hub 1314 and UEs (e.g., UE 1312C and/or 1312D), and between the hub 1314 and the core network 1306. In other examples, the hub 1314 is connected to the core network 1306 and/or one or more UEs via a wired connection. Moreover, the hub 1314 may be configured to connect to an M2M service provider over the access network 1304 and/or to another UE over a direct connection. In some scenarios, UEs may establish a wireless connection with the network nodes 1310 while still connected via the hub 1314 via a wired or wireless connection. In some embodiments, the hub 1314 may be a dedicated hub - that is, a hub whose primary function is to route communications to/from the UEs from/to the network node 1310B. In other embodiments, the hub 1314 may be a non-dedicated hub - that is, a device which is capable of operating to route communications between the UEs and network node 1310B, but which is additionally capable of operating as a communication start and/or end point for certain data channels.

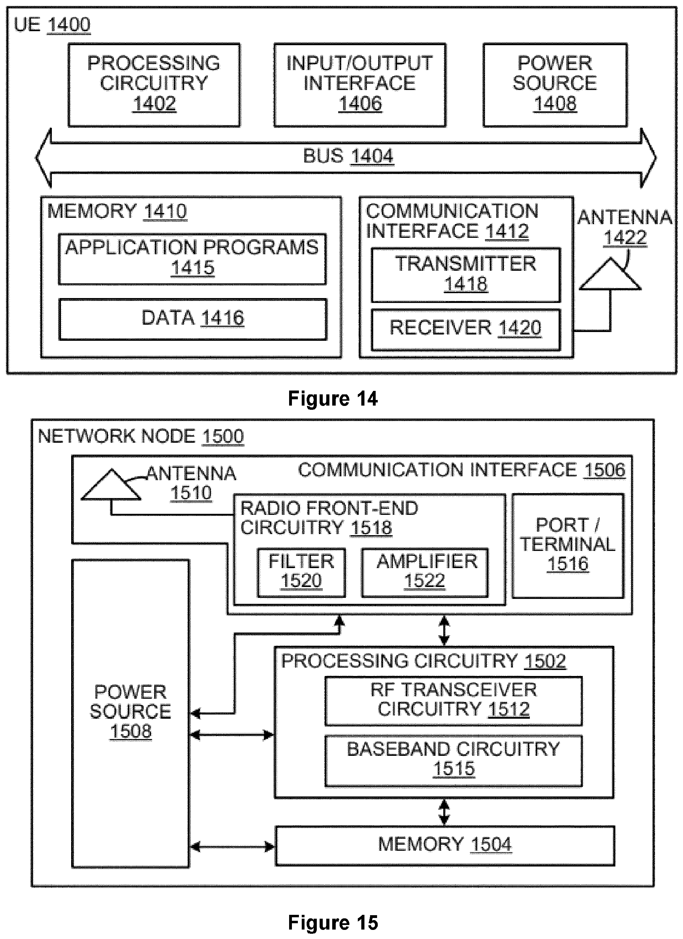

Figure 14 shows a UE 1400 in accordance with some embodiments. As used herein, a UE refers to a device capable, configured, arranged and/or operable to communicate wirelessly with network nodes and/or other UEs. Examples of a UE include, but are not limited to, a smart phone, mobile phone, cell phone, voice over IP (VoIP) phone, wireless local loop phone, desktop computer, personal digital assistant (PDA), wireless cameras, gaming console or device, music storage device, playback appliance, wearable terminal device, wireless endpoint, mobile station, tablet, laptop, laptop-embedded equipment (LEE), laptop-mounted equipment (LME), smart device, wireless customer-premise equipment (CPE), vehicle-mounted or vehicle embedded/integrated wireless device, etc. Other examples include any UE identified by the 3rd Generation Partnership Project (3GPP), including a narrow band internet of things (NB-IoT) UE, a machine type communication (MTC) UE, and/or an enhanced MTC (eMTC) UE.

A UE may support device-to-device (D2D) communication, for example by implementing a 3GPP standard for sidelink communication, Dedicated Short-Range Communication (DSRC), vehicle-to-vehicle (V2V), vehicle-to-infrastructure (V2I), or vehicle-to-everything (V2X). In other examples, a UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter).

The UE 1400 includes processing circuitry 1402 that is operatively coupled via a bus 1404 to an input/output interface 1406, a power source 1408, a memory 1410, a communication interface 1412, and/or any other component, or any combination thereof. Certain UEs may utilize all or a subset of the components shown in Figure 14. The level of integration between the components may vary from one UE to another UE. Further, certain UEs may contain multiple instances of a component, such as multiple processors, memories, transceivers, transmitters, receivers, etc.

The processing circuitry 1402 is configured to process instructions and data and may be configured to implement any sequential state machine operative to execute instructions stored as machine-readable computer programs in the memory 1410. The processing circuitry 1402 may be implemented as one or more hardware-implemented state machines (e.g., in discrete logic, field-programmable gate arrays (FPGAs), application specific integrated circuits (ASICs), etc.); programmable logic together with appropriate firmware; one or more stored computer programs, general-purpose processors, such as a microprocessor or digital signal processor (DSP), together with appropriate software; or any combination of the above. For example, the processing circuitry 1402 may include multiple central processing units (CPUs).

In the example, the input/output interface 1406 may be configured to provide an interface or interfaces to an input device, output device, or one or more input and/or output devices. Examples of an output device include a speaker, a sound card, a video card, a display, a monitor, a printer, an actuator, an emitter, a smartcard, another output device, or any combination thereof. An input device may allow a user to capture information into the UE 1400. Examples of an input device include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, a biometric sensor, etc., or any combination thereof. An output device may use the same type of interface port as an input device. For example, a Universal Serial Bus (USB) port may be used to provide an input device and an output device.

In some embodiments, the power source 1408 is structured as a battery or battery pack. Other types of power sources, such as an external power source (e.g., an electricity outlet), photovoltaic device, or power cell, may be used. The power source 1408 may further include power circuitry for delivering power from the power source 1408 itself, and/or an external power source, to the various parts of the UE 1400 via input circuitry or an interface such as an electrical power cable. Delivering power may be, for example, for charging of the power source 1408. Power circuitry may perform any formatting, converting, or other modification to the power from the power source 1408 to make the power suitable for the respective components of the UE 1400 to which power is supplied.

The memory 1410 may be or be configured to include memory such as random access memory (RAM), read-only memory (ROM), programmable read-only memory (PROM), erasable programmable read-only memory (EPROM), electrically erasable programmable read-only memory (EEPROM), magnetic disks, optical disks, hard disks, removable cartridges, flash drives, and so forth. In one example, the memory 1410 includes one or more application programs 1414, such as an operating system, web browser application, a widget, gadget engine, or other application, and corresponding data 1416. The memory 1410 may store, for use by the UE 1400, any of a variety of various operating systems or combinations of operating systems.

The memory 1410 may be configured to include a number of physical drive units, such as redundant array of independent disks (RAID), flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as tamper resistant module in the form of a universal integrated circuit card (UICC) including one or more subscriber identity modules (SIMs), such as a USIM and/or ISIM, other memory, or any combination thereof. The UICC may for example be an embedded UICC (eUICC), integrated UICC (iUICC) or a removable UICC commonly known as 'SIM card.' The memory 1410 may allow the UE 1400 to access instructions, application programs and the like, stored on transitory or non-transitory memory media, to off-load data, or to upload data. An article of manufacture, such as one utilizing a communication system may be tangibly embodied as or in the memory 1410, which may be or comprise a device-readable storage medium.

The processing circuitry 1402 may be configured to communicate with an access network or other network using the communication interface 1412. The communication interface 1412 may comprise one or more communication subsystems and may include or be communicatively coupled to an antenna 1422. The communication interface 1412 may include one or more transceivers used to communicate, such as by communicating with one or more remote transceivers of another device capable of wireless communication (e.g., another UE or a network node in an access network). Each transceiver may include a transmitter 1418 and/or a receiver 1420 appropriate to provide network communications (e.g., optical, electrical, frequency allocations, and so forth). Moreover, the transmitter 1418 and receiver 1420 may be coupled to one or more antennas (e.g., antenna 1422) and may share circuit components, software or firmware, or alternatively be implemented separately.

In the illustrated embodiment, communication functions of the communication interface 1412 may include cellular communication, Wi-Fi communication, LPWAN communication, data communication, voice communication, multimedia communication, short-range communications such as Bluetooth, near-field communication, location-based communication such as the use of the global positioning system (GPS) to determine a location, another like communication function, or any combination thereof. Communications may be implemented in according to one or more communication protocols and/or standards, such as IEEE 802.11, Code Division Multiplexing Access (CDMA), Wideband Code Division Multiple Access (WCDMA), GSM, LTE, New Radio (NR), UMTS, WiMax, Ethernet, transmission control protocol/internet protocol (TCP/IP), synchronous optical networking (SONET), Asynchronous Transfer Mode (ATM), QUIC, Hypertext Transfer Protocol (HTTP), and so forth.

Regardless of the type of sensor, a UE may provide an output of data captured by its sensors, through its communication interface 1412, via a wireless connection to a network node. Data captured by sensors of a UE can be communicated through a wireless connection to a network node via another UE. The output may be periodic (e.g., once every 15 minutes if it reports the sensed temperature), random (e.g., to even out the load from reporting from several sensors), in response to a triggering event (e.g., when moisture is detected an alert is sent), in response to a request (e.g., a user initiated request), or a continuous stream (e.g., a live video feed of a patient).

As another example, a UE comprises an actuator, a motor, or a switch, related to a communication interface configured to receive wireless input from a network node via a wireless connection. In response to the received wireless input the states of the actuator, the motor, or the switch may change. For example, the UE may comprise a motor that adjusts the control surfaces or rotors of a drone in flight according to the received input or to a robotic arm performing a medical procedure according to the received input.

A UE, when in the form of an Internet of Things (IoT) device, may be a device for use in one or more application domains, these domains comprising, but not limited to, city wearable technology, extended industrial application and healthcare. Non-limiting examples of such an IoT device are a device which is or which is embedded in: a connected refrigerator or freezer, a TV, a connected lighting device, an electricity meter, a robot vacuum cleaner, a voice controlled smart speaker, a home security camera, a motion detector, a thermostat, a smoke detector, a door/window sensor, a flood/moisture sensor, an electrical door lock, a connected doorbell, an air conditioning system like a heat pump, an autonomous vehicle, a surveillance system, a weather monitoring device, a vehicle parking monitoring device, an electric vehicle charging station, a smart watch, a fitness tracker, a head-mounted display for Augmented Reality (AR) or Virtual Reality (VR), a wearable for tactile augmentation or sensory enhancement, a water sprinkler, an animal- or item-tracking device, a sensor for monitoring a plant or animal, an industrial robot, an Unmanned Aerial Vehicle (UAV), and any kind of medical device, like a heart rate monitor or a remote controlled surgical robot. A UE in the form of an IoT device comprises circuitry and/or software in dependence of the intended application of the IoT device in addition to other components as described in relation to the UE 1400 shown in Figure 14.

As yet another specific example, in an IoT scenario, a UE may represent a machine or other device that performs monitoring and/or measurements, and transmits the results of such monitoring and/or measurements to another UE and/or a network node. The UE may in this case be an M2M device, which may in a 3GPP context be referred to as an MTC device. As one particular example, the UE may implement the 3GPP NB-IoT standard. In other scenarios, a UE may represent a vehicle, such as a car, a bus, a truck, a ship and an airplane, or other equipment that is capable of monitoring and/or reporting on its operational status or other functions associated with its operation.

In practice, any number of UEs may be used together with respect to a single use case. For example, a first UE might be or be integrated in a drone and provide the drone's speed information (obtained through a speed sensor) to a second UE that is a remote controller operating the drone. When the user makes changes from the remote controller, the first UE may adjust the throttle on the drone (e.g., by controlling an actuator) to increase or decrease the drone's speed. The first and/or the second UE can also include more than one of the functionalities described above. For example, a UE might comprise the sensor and the actuator, and handle communication of data for both the speed sensor and the actuators.

Figure 15 shows a network node 1500 in accordance with some embodiments. As used herein, network node refers to equipment capable, configured, arranged and/or operable to communicate directly or indirectly with a UE and/or with other network nodes or equipment, in a telecommunication network. Examples of network nodes include, but are not limited to, access points (APs) (e.g., radio access points), base stations (BSs) (e.g., radio base stations, Node Bs, evolved Node Bs (eNBs) and NR NodeBs (gNBs)).

Base stations may be categorized based on the amount of coverage they provide (or, stated differently, their transmit power level) and so, depending on the provided amount of coverage, may be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS).

Other examples of network nodes include multiple transmission point (multi-TRP) 5G access nodes, multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), Operation and Maintenance (O&M) nodes, Operations Support System (OSS) nodes, Self-Organizing Network (SON) nodes, positioning nodes (e.g., Evolved Serving Mobile Location Centers (E-SMLCs)), and/or Minimization of Drive Tests (MDTs).

The network node 1500 includes a processing circuitry 1502, a memory 1504, a communication interface 1506, and a power source 1508. The network node 1500 may be composed of multiple physically separate components (e.g., a NodeB component and a RNC component, or a BTS component and a BSC component, etc.), which may each have their own respective components. In certain scenarios in which the network node 1500 comprises multiple separate components (e.g., BTS and BSC components), one or more of the separate components may be shared among several network nodes. For example, a single RNC may control multiple NodeBs. In such a scenario, each unique NodeB and RNC pair, may in some instances be considered a single separate network node. In some embodiments, the network node 1500 may be configured to support multiple radio access technologies (RATs). In such embodiments, some components may be duplicated (e.g., separate memory 1504 for different RATs) and some components may be reused (e.g., a same antenna 1510 may be shared by different RATs). The network node 1500 may also include multiple sets of the various illustrated components for different wireless technologies integrated into network node 1500, for example GSM, WCDMA, LTE, NR, WiFi, Zigbee, Z-wave, LoRaWAN, Radio Frequency Identification (RFID) or Bluetooth wireless technologies. These wireless technologies may be integrated into the same or different chip or set of chips and other components within network node 1500.

The processing circuitry 1502 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 1500 components, such as the memory 1504, to provide network node 1500 functionality.

In some embodiments, the processing circuitry 1502 includes a system on a chip (SOC). In some embodiments, the processing circuitry 1502 includes one or more of radio frequency (RF) transceiver circuitry 1512 and baseband processing circuitry 1515. In some embodiments, the radio frequency (RF) transceiver circuitry 1512 and the baseband processing circuitry 1514 may be on separate chips (or sets of chips), boards, or units, such as radio units and digital units. In alternative embodiments, part or all of RF transceiver circuitry 1512 and baseband processing circuitry 1514 may be on the same chip or set of chips, boards, or units.

The memory 1504 may comprise any form of volatile or non-volatile computer-readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device-readable and/or computer-executable memory devices that store information, data, and/or instructions that may be used by the processing circuitry 1502. The memory 1504 may store any suitable instructions, data, or information, including a computer program, software, an application including one or more of logic, rules, code, tables, and/or other instructions capable of being executed by the processing circuitry 1502 and utilized by the network node 1500. The memory 1504 may be used to store any calculations made by the processing circuitry 1502 and/or any data received via the communication interface 1506. In some embodiments, the processing circuitry 1502 and memory 1504 is integrated.

The communication interface 1506 is used in wired or wireless communication of signaling and/or data between a network node, access network, and/or UE. As illustrated, the communication interface 1506 comprises port(s)/terminal(s) 1516 to send and receive data, for example to and from a network over a wired connection. The communication interface 1506 also includes radio front-end circuitry 1518 that may be coupled to, or in certain embodiments a part of, the antenna 1510. Radio front-end circuitry 1518 comprises filters 1520 and amplifiers 1522. The radio front-end circuitry 1518 may be connected to an antenna 1510 and processing circuitry 1502. The radio front-end circuitry may be configured to condition signals communicated between antenna 1510 and processing circuitry 1502. The radio front-end circuitry 1518 may receive digital data that is to be sent out to other network nodes or UEs via a wireless connection. The radio front-end circuitry 1518 may convert the digital data into a radio signal having the appropriate channel and bandwidth parameters using a combination of filters 1520 and/or amplifiers 1522. The radio signal may then be transmitted via the antenna 1510. Similarly, when receiving data, the antenna 1510 may collect radio signals which are then converted into digital data by the radio front-end circuitry 1518. The digital data may be passed to the processing circuitry 1502. In other embodiments, the communication interface may comprise different components and/or different combinations of components.

In certain alternative embodiments, the network node 1500 does not include separate radio front-end circuitry 1518, instead, the processing circuitry 1502 includes radio front-end circuitry and is connected to the antenna 1510. Similarly, in some embodiments, all or some of the RF transceiver circuitry 1512 is part of the communication interface 1506. In still other embodiments, the communication interface 1506 includes one or more ports or terminals 1516, the radio front-end circuitry 1518, and the RF transceiver circuitry 1512, as part of a radio unit (not shown), and the communication interface 1506 communicates with the baseband processing circuitry 1515, which is part of a digital unit (not shown).

The antenna 1510 may include one or more antennas, or antenna arrays, configured to send and/or receive wireless signals. The antenna 1510 may be coupled to the radio front-end circuitry 1518 and may be any type of antenna capable of transmitting and receiving data and/or signals wirelessly. In certain embodiments, the antenna 1510 is separate from the network node 1500 and connectable to the network node 1500 through an interface or port.

The antenna 1510, communication interface 1506, and/or the processing circuitry 1502 may be configured to perform any receiving operations and/or certain obtaining operations described herein as being performed by the network node. Any information, data and/or signals may be received from a UE, another network node and/or any other network equipment. Similarly, the antenna 1510, the communication interface 1506, and/or the processing circuitry 1502 may be configured to perform any transmitting operations described herein as being performed by the network node. Any information, data and/or signals may be transmitted to a UE, another network node and/or any other network equipment.

The power source 1508 provides power to the various components of network node 1500 in a form suitable for the respective components (e.g., at a voltage and current level needed for each respective component). The power source 1508 may further comprise, or be coupled to, power management circuitry to supply the components of the network node 1500 with power for performing the functionality described herein. For example, the network node 1500 may be connectable to an external power source (e.g., the power grid, an electricity outlet) via an input circuitry or interface such as an electrical cable, whereby the external power source supplies power to power circuitry of the power source 1508. As a further example, the power source 1508 may comprise a source of power in the form of a battery or battery pack which is connected to, or integrated in, power circuitry. The battery may provide backup power should the external power source fail.

Embodiments of the network node 1500 may include additional components beyond those shown in Figure 15 for providing certain aspects of the network node's functionality, including any of the functionality described herein and/or any functionality necessary to support the subject matter described herein. For example, the network node 1500 may include user interface equipment to allow input of information into the network node 1500 and to allow output of information from the network node 1500. This may allow a user to perform diagnostic, maintenance, repair, and other administrative functions for the network node 1500.

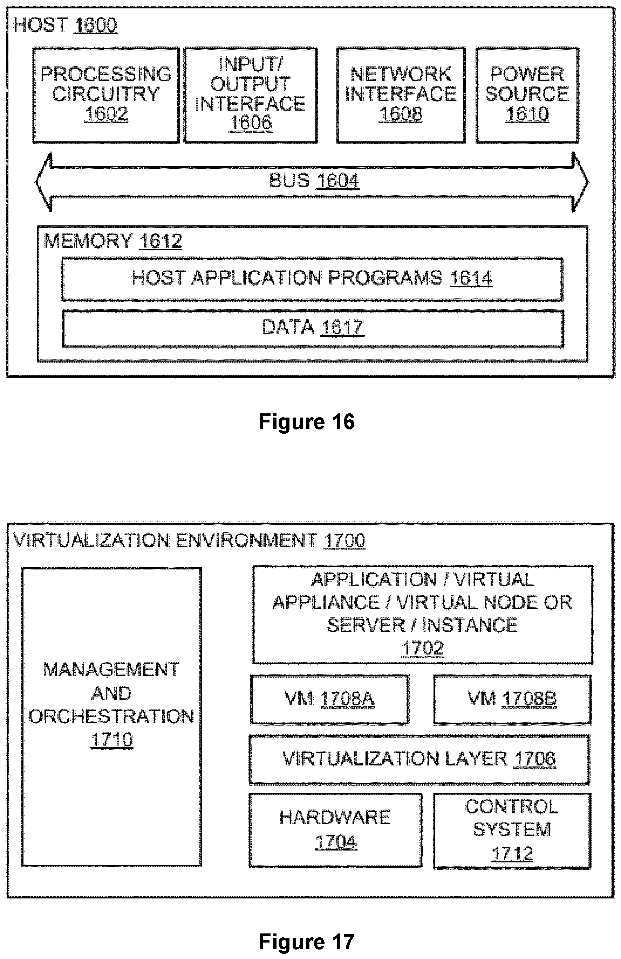

Figure 16 is a block diagram of a host 1600, which may be an embodiment of the host 1316 of Figure 13, in accordance with various aspects described herein. As used herein, the host 1600 may be or comprise various combinations hardware and/or software, including a standalone server, a blade server, a cloud-implemented server, a distributed server, a virtual machine, container, or processing resources in a server farm. The host 1600 may provide one or more services to one or more UEs.

The host 1600 includes processing circuitry 1602 that is operatively coupled via a bus 1604 to an input/output interface 1606, a network interface 1608, a power source 1610, and a memory 1612. Other components may be included in other embodiments. Features of these components may be substantially similar to those described with respect to the devices of previous figures, such as Figures 14 and 15, such that the descriptions thereof are generally applicable to the corresponding components of host 1600.

The memory 1612 may include one or more computer programs including one or more host application programs 1614 and data 1616, which may include user data, e.g., data generated by a UE for the host 1600 or data generated by the host 1600 for a UE. Embodiments of the host 1600 may utilize only a subset or all of the components shown. The host application programs 1614 may be implemented in a container-based architecture and may provide support for video codecs (e.g., Versatile Video Coding (VVC), High Efficiency Video Coding (HEVC), Advanced Video Coding (AVC), MPEG, VP9) and audio codecs (e.g., FLAC, Advanced Audio Coding (AAC), MPEG, G.711), including transcoding for multiple different classes, types, or implementations of UEs (e.g., handsets, desktop computers, wearable display systems, heads-up display systems). The host application programs 1614 may also provide for user authentication and licensing checks and may periodically report health, routes, and content availability to a central node, such as a device in or on the edge of a core network. Accordingly, the host 1600 may select and/or indicate a different host for over-the-top services for a UE. The host application programs 1614 may support various protocols, such as the HTTP Live Streaming (HLS) protocol, Real-Time Messaging Protocol (RTMP), Real-Time Streaming Protocol (RTSP), Dynamic Adaptive Streaming over HTTP (MPEG-DASH), etc.

Figure 17 is a block diagram illustrating a virtualization environment 1700 in which functions implemented by some embodiments may be virtualized. In the present context, virtualizing means creating virtual versions of apparatuses or devices which may include virtualizing hardware platforms, storage devices and networking resources. As used herein, virtualization can be applied to any device described herein, or components thereof, and relates to an implementation in which at least a portion of the functionality is implemented as one or more virtual components. Some or all of the functions described herein may be implemented as virtual components executed by one or more virtual machines (VMs) implemented in one or more virtual environments 1700 hosted by one or more of hardware nodes, such as a hardware computing device that operates as a network node, UE, core network node, or host. Further, in embodiments in which the virtual node does not require radio connectivity (e.g., a core network node or host), then the node may be entirely virtualized.

Applications 1702 (which may alternatively be called software instances, virtual appliances, network functions, virtual nodes, virtual network functions, etc.) are run in the virtualization environment 1700 to implement some of the features, functions, and/or benefits of some of the embodiments disclosed herein.

Hardware 1704 includes processing circuitry, memory that stores software and/or instructions executable by hardware processing circuitry, and/or other hardware devices as described herein, such as a network interface, input/output interface, and so forth. Software may be executed by the processing circuitry to instantiate one or more virtualization layers 1706 (also referred to as hypervisors or virtual machine monitors (VMMs)), provide VMs 1708A and 1708B (one or more of which may be generally referred to as VMs 1708), and/or perform any of the functions, features and/or benefits described in relation with some embodiments described herein. The virtualization layer 1706 may present a virtual operating platform that appears like networking hardware to the VMs 1708.

The VMs 1708 comprise virtual processing, virtual memory, virtual networking or interface and virtual storage, and may be run by a corresponding virtualization layer 1706. Different embodiments of the instance of a virtual appliance 1702 may be implemented on one or more of VMs 1708, and the implementations may be made in different ways. Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, a VM 1708 may be a software implementation of a physical machine that runs programs as if they were executing on a physical, non-virtualized machine. Each of the VMs 1708, and that part of hardware 1704 that executes that VM, be it hardware dedicated to that VM and/or hardware shared by that VM with others of the VMs, forms separate virtual network elements. Still in the context of NFV, a virtual network function is responsible for handling specific network functions that run in one or more VMs 1708 on top of the hardware 1704 and corresponds to the application 1702.

Hardware 1704 may be implemented in a standalone network node with generic or specific components. Hardware 1704 may implement some functions via virtualization. Alternatively, hardware 1704 may be part of a larger cluster of hardware (e.g., such as in a data center or CPE) where many hardware nodes work together and are managed via management and orchestration 1710, which, among others, oversees lifecycle management of applications 1702. In some embodiments, hardware 1704 is coupled to one or more radio units that each include one or more transmitters and one or more receivers that may be coupled to one or more antennas. Radio units may communicate directly with other hardware nodes via one or more appropriate network interfaces and may be used in combination with the virtual components to provide a virtual node with radio capabilities, such as a radio access node or a base station. In some embodiments, some signaling can be provided with the use of a control system 1712 which may alternatively be used for communication between hardware nodes and radio units.

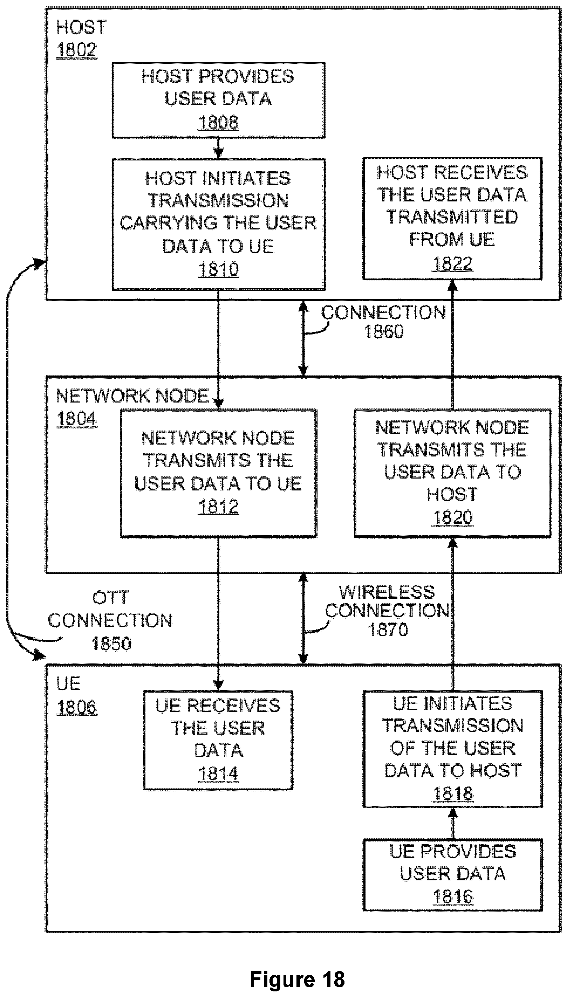

Figure 18 shows a communication diagram of a host 1802 communicating via a network node 1804 with a UE 1806 over a partially wireless connection in accordance with some embodiments. Example implementations, in accordance with various embodiments, of the UE (such as a UE 1312A of Figure 13 and/or UE 1400 of Figure 14), network node (such as network node 1310A of Figure 13 and/or network node 1500 of Figure 15), and host (such as host 1316 of Figure 13 and/or host 1600 of Figure 16) discussed in the preceding paragraphs will now be described with reference to Figure 18.

Like host 1600, embodiments of host 1802 include hardware, such as a communication interface, processing circuitry, and memory. The host 1802 also includes software, which is stored in or accessible by the host 1802 and executable by the processing circuitry. The software includes a host application that may be operable to provide a service to a remote user, such as the UE 1806 connecting via an over-the-top (OTT) connection 1850 extending between the UE 1806 and host 1802. In providing the service to the remote user, a host application may provide user data which is transmitted using the OTT connection 1850.

The network node 1804 includes hardware enabling it to communicate with the host 1802 and UE 1806. The connection 1860 may be direct or pass through a core network (like core network 1306 of Figure 13) and/or one or more other intermediate networks, such as one or more public, private, or hosted networks. For example, an intermediate network may be a backbone network or the Internet.

The UE 1806 includes hardware and software, which is stored in or accessible by UE 1806 and executable by the UE's processing circuitry. The software includes a client application, such as a web browser or operator-specific "app" that may be operable to provide a service to a human or non-human user via UE 1806 with the support of the host 1802. In the host 1802, an executing host application may communicate with the executing client application via the OTT connection 1850 terminating at the UE 1806 and host 1802. In providing the service to the user, the UE's client application may receive request data from the host's host application and provide user data in response to the request data. The OTT connection 1850 may transfer both the request data and the user data. The UE's client application may interact with the user to generate the user data that it provides to the host application through the OTT connection 1850.

The OTT connection 1850 may extend via a connection 1860 between the host 1802 and the network node 1804 and via a wireless connection 1870 between the network node 1804 and the UE 1806 to provide the connection between the host 1802 and the UE 1806. The connection 1860 and wireless connection 1870, over which the OTT connection 1850 may be provided, have been drawn abstractly to illustrate the communication between the host 1802 and the UE 1806 via the network node 1804, without explicit reference to any intermediary devices and the precise routing of messages via these devices.

As an example of transmitting data via the OTT connection 1850, in step 1808, the host 1802 provides user data, which may be performed by executing a host application. In some embodiments, the user data is associated with a particular human user interacting with the UE 1806. In other embodiments, the user data is associated with a UE 1806 that shares data with the host 1802 without explicit human interaction. In step 1810, the host 1802 initiates a transmission carrying the user data towards the UE 1806. The host 1802 may initiate the transmission responsive to a request transmitted by the UE 1806. The request may be caused by human interaction with the UE 1806 or by operation of the client application executing on the UE 1806. The transmission may pass via the network node 1804, in accordance with the teachings of the embodiments described throughout this disclosure. Accordingly, in step 1812, the network node 1804 transmits to the UE 1806 the user data that was carried in the transmission that the host 1802 initiated, in accordance with the teachings of the embodiments described throughout this disclosure. In step 1814, the UE 1806 receives the user data carried in the transmission, which may be performed by a client application executed on the UE 1806 associated with the host application executed by the host 1802.

In some examples, the UE 1806 executes a client application which provides user data to the host 1802. The user data may be provided in reaction or response to the data received from the host 1802. Accordingly, in step 1816, the UE 1806 may provide user data, which may be performed by executing the client application. In providing the user data, the client application may further consider user input received from the user via an input/output interface of the UE 1806. Regardless of the specific manner in which the user data was provided, the UE 1806 initiates, in step 1818, transmission of the user data towards the host 1802 via the network node 1804. In step 1820, in accordance with the teachings of the embodiments described throughout this disclosure, the network node 1804 receives user data from the UE 1806 and initiates transmission of the received user data towards the host 1802. In step 1822, the host 1802 receives the user data carried in the transmission initiated by the UE 1806.

In an example scenario, factory status information may be collected and analyzed by the host 1802. As another example, the host 1802 may process audio and video data which may have been retrieved from a UE for use in creating maps. As another example, the host 1802 may collect and analyze real-time data to assist in controlling vehicle congestion (e.g., controlling traffic lights). As another example, the host 1802 may store surveillance video uploaded by a UE. As another example, the host 1802 may store or control access to media content such as video, audio, VR or AR which it can broadcast, multicast or unicast to UEs. As other examples, the host 1802 may be used for energy pricing, remote control of non-time critical electrical load to balance power generation needs, location services, presentation services (such as compiling diagrams etc. from data collected from remote devices), or any other function of collecting, retrieving, storing, analyzing and/or transmitting data.

In some examples, a measurement procedure may be provided for the purpose of monitoring data rate, latency and other factors on which the one or more embodiments improve. There may further be an optional network functionality for reconfiguring the OTT connection 1850 between the host 1802 and UE 1806, in response to variations in the measurement results. The measurement procedure and/or the network functionality for reconfiguring the OTT connection may be implemented in software and hardware of the host 1802 and/or UE 1806. In some embodiments, sensors (not shown) may be deployed in or in association with other devices through which the OTT connection 1850 passes; the sensors may participate in the measurement procedure by supplying values of the monitored quantities exemplified above, or supplying values of other physical quantities from which software may compute or estimate the monitored quantities. The reconfiguring of the OTT connection 1850 may include message format, retransmission settings, preferred routing etc.; the reconfiguring need not directly alter the operation of the network node 1804. Such procedures and functionalities may be known and practiced in the art. In certain embodiments, measurements may involve proprietary UE signaling that facilitates measurements of throughput, propagation times, latency and the like, by the host 1802. The measurements may be implemented in that software causes messages to be transmitted, in particular empty or 'dummy' messages, using the OTT connection 1850 while monitoring propagation times, errors, etc.

Although the computing devices described herein (e.g., UEs, network nodes, hosts) may include the illustrated combination of hardware components, other embodiments may comprise computing devices with different combinations of components. It is to be understood that these computing devices may comprise any suitable combination of hardware and/or software needed to perform the tasks, features, functions and methods disclosed herein. Determining, calculating, obtaining or similar operations described herein may be performed by processing circuitry, which may process information by, for example, converting the obtained information into other information, comparing the obtained information or converted information to information stored in the network node, and/or performing one or more operations based on the obtained information or converted information, and as a result of said processing making a determination. Moreover, while components are depicted as single boxes located within a larger box, or nested within multiple boxes, in practice, computing devices may comprise multiple different physical components that make up a single illustrated component, and functionality may be partitioned between separate components. For example, a communication interface may be configured to include any of the components described herein, and/or the functionality of the components may be partitioned between the processing circuitry and the communication interface. In another example, non-computationally intensive functions of any of such components may be implemented in software or firmware and computationally intensive functions may be implemented in hardware.

In certain embodiments, some or all of the functionality described herein may be provided by processing circuitry executing instructions stored on in memory, which in certain embodiments may be a computer program product in the form of a non-transitory computer-readable storage medium. In alternative embodiments, some or all of the functionality may be provided by the processing circuitry without executing instructions stored on a separate or discrete device-readable storage medium, such as in a hard-wired manner. In any of those particular embodiments, whether executing instructions stored on a non-transitory computer-readable storage medium or not, the processing circuitry can be configured to perform the described functionality. The benefits provided by such functionality are not limited to the processing circuitry alone or to other components of the computing device but are enjoyed by the computing device as a whole, and/or by end users and a wireless network generally.

References are identified below:
3GPP 23.247 "5G multicast-broadcast services; Stage 2", V18.0.0 (2022-12)
3GPP 38.300 "NR and NG-RAN Overall Description; Stage 2", V17.2.0 (2022-09)
3GPP 38.331 "Radio Resource Control (RRC) protocol specification", V17.2.0 (2022-09)
3GPP 38.321 "Medium Access Control (MAC) protocol specification", V17.2.0 (2022-09)

## Claims

1. A method for a user equipment, UE, (300, 1312A-1312D, 1400, 1702, 1806) supporting only one group-radio network temporary identifier, G-RNTI, to join multicast sessions, the method comprising:
transmitting (401) an indication to a network node (302, 1310A-1310B, 1500, 1702, 1804) of the G-RNTI that the UE (300, 1312A-1312D, 1400, 1702, 1806) supports;
determining (403) that the UE (300, 1312A-1312D, 1400, 1702, 1806) wants to receive a first multicast session;
joining (405) the first multicast session;
receiving (407) a G-RNTI configuration to receive the first multicast session; determining (409) that the UE (300, 1312A-1312D, 1400, 1702, 1806) wants to receive a second multicast session;
joining (411) the second multicast session;
**characterized by**:
receiving (413) a request for a priority list of multicast sessions the UE has joined from the network node (302, 1310A-1310B, 1500, 1702, 1804);
responsive to receiving the request, determining (415) and transmitting the priority list to the network node (302, 1310A-1310B, 1500, 1702, 1804); and
receiving (417) a G-RNTI configuration to receive one of the first and the second multicast session according to their priority order.

2. The method of claim 1, wherein determining that the UE (300, 1312A-1312D, 1400, 1702, 1806) wants to receive the first multicast session comprises determining that the UE (300, 1312A-1312D, 1400, 1702, 1806) wants to receive the first multicast session based on at least one of:
a calendar on the UE (300, 1312A-1312D, 1400, 1702, 1806);
a message received from another UE;
a message received from a network node; and
an indication from a user of the UE (300, 1312A-1312D, 1400, 1702, 1806).

3. The method of any of claims 1-2, wherein determining that the UE (300, 1312A-1312D, 1400, 1702, 1806) wants to receive the second multicast session comprises determining that the UE (300, 1312A-1312D, 1400, 1702, 1806) wants to receive the second multicast session based on at least one of:
a calendar on the UE (300, 1312A-1312D, 1400, 1702, 1806);
a message received from another UE;
a message received from a network node; and
an indication from a user of the UE (300, 1312A-1312D, 1400, 1702, 1806).

4. The method of any of claims 1-3, wherein the multicast sessions comprise a plurality of multicast sessions and the priority list comprises an order in which the UE (300, 1312A-1312D, 1400, 1702, 1806) wants to join multicast sessions of the plurality of multicast sessions.

5. The method of any of claims 1-4, wherein transmitting the priority list comprises signaling the priority list as an information element in a radio resource control, RRC, message to the network node (302, 1310A-1310B, 1500, 1702, 1804).

6. The method of any of claims 1-4, wherein transmitting the priority list comprises signaling the priority list in a small data transmission to the network node (302, 1310A-1310B, 1500, 1702, 1804).

7. The method of any of claims 1-6, further comprising:
determining (419) that the UE (300, 1312A-1312D, 1400, 1702, 1806) wants to receive the first multicast session;
updating (421) the priority list and transmitting the updated priority list to the network node 302;
receiving (423) a G-RNTI configuration to receive the first multicast session.

8. The method of any of claims 1-7, further comprising:
determining (425) that the UE (300, 1312A-1312D, 1400, 1702, 1806) does not want to receive multicast sessions;
leaving (427) the first multicast session; and
leaving (429) the second multicast session.

9. The method of claim 8, wherein determining that the UE (300, 1312A-1312D, 1400, 1702, 1806) does not want to receive multicast sessions comprises determining that the UE (300, 1312A-1312D, 1400, 1702, 1806) does not want to receive multicast sessions based on at least one of:
a calendar on the UE (300, 1312A-1312D, 1400, 1702, 1806);
a message received from another UE; and
an indication from a user of the UE (300, 1312A-1312D, 1400, 1702, 1806).

10. A method in a network node (302, 1310A-1210B, 1500, 1702, 1804) comprising:
receiving (701) an indication from a UE (300, 1312A-1312D, 1400, 1702, 1806) supporting only one group-radio network temporary identifier, G-RNTI, of the G-RNTI, that the UE (300, 1312A-1312D, 1400, 1702, 1806) supports;
receiving (703) a session activation for a first multicast session for the UE (300, 1312A-1312D, 1400, 1702, 1806);
receiving (705) a session activation for a second multicast session for the UE (300, 1312A-1312D, 1400, 1702, 1806); transmitting (707) a G-RNTI, configuration to the UE (300, 1312A-1312D, 1400, 1702, 1806) to receive the first multicast session;
receiving (709) an indication from a core network (304) that the UE (300, 1312A-1312D, 1400, 1702, 1806) has joined the second multicast session;
**characterized by**:
transmitting (711) a request for a priority list of multicast sessions joined by the UE to the UE (300, 1312A-1312D, 1400, 1702, 1806);
receiving (713) the priority list from the UE (300, 1312A-1312D, 1400, 1702, 1806); and
transmitting (715) a G-RNTI configuration to the UE (300, 1312A-1312D, 1400, 1702, 1806) to receive one of the first or the second multicast session according to their priority order.

11. The method of claim 10, further comprising receiving additional session activations from the CN (304) for additional multicast sessions.

12. The method of any of claims 10-11, wherein transmitting a G-RNTI configuration to the UE (300, 1312A-1312D, 1400, 1702, 1806) to receive the second multicast session comprises transmitting the G-RNTI configuration to the UE (300, 1312A-1312D, 1400, 1702, 1806) to receive the second multicast session based on a first entry in the priority list indicating the second multicast session.

13. The method of any of claims 10-12, further comprising
receiving (717) an updated priority list from the UE (300, 1312A-1312D, 1400, 1702, 1806); and
responsive to the first entry in the priority list indicating the first multicast session, transmitting (719) a G-RNTI configuration to the UE 300 to receive the first multicast session.

14. A user equipment, UE, (300, 1312A-1312D, 1400, 1702, 1804) comprising:
processing circuitry (1402); and
memory (1410) coupled with the processing circuitry, wherein the memory includes instructions that when executed by the processing circuitry causes the UE (300, 1312A-1312D, 1400, 1702, 1804) to perform operations according to any of claims 1-9.

15. A network node (302, 1310A, 1310B, 1500, 1702, 1804) comprising:
processing circuitry (1502); and
memory (1504) coupled with the processing circuitry, wherein the memory includes instructions that when executed by the processing circuitry causes the network node to perform operations according to any of claims 10-13.

## Patentansprüche

1. Verfahren für eine Benutzereinrichtung, UE, (300, 1312A-1312D, 1400, 1702, 1806), die nur eine temporäre Gruppen-Funknetzwerkkennung, G-RNTI, unterstützt, um an Multicast-Sitzungen teilzunehmen, wobei das Verfahren Folgendes umfasst:
Senden (401) einer Angabe der G-RNTI, die die UE (300, 1312A-1312D, 1400, 1702, 1806) unterstützt, an einen Netzwerkknoten (302, 1310A-1310B, 1500, 1702, 1804);
Bestimmen (403), dass die UE (300, 1312A-1312D, 1400, 1702, 1806) eine erste Multicast-Sitzung empfangen möchte;
Teilnehmen (405) an der ersten Multicast-Sitzung;
Empfangen (407) einer G-RNTI-Konfiguration, um die erste Multicast-Sitzung zu empfangen;
Bestimmen (409), dass die UE (300, 1312A-1312D, 1400, 1702, 1806) eine zweite Multicast-Sitzung empfangen möchte;
Teilnehmen (411) an der zweiten Multicast-Sitzung;
**gekennzeichnet durch**:
Empfangen (413) einer Anforderung für eine Prioritätsliste von Multicast-Sitzungen, an denen die UE teilgenommen hat, von dem Netzwerkknoten (302, 1310A-1310B, 1500, 1702, 1804);
in Reaktion auf den Empfang der Anforderung Bestimmen (415) und Senden der Prioritätsliste an den Netzwerkknoten (302, 1310A-1310B, 1500, 1702, 1804); und
Empfangen (417) einer G-RNTI-Konfiguration, um eine von der ersten und der zweiten Multicast-Sitzung gemäß ihrer Prioritätsreihenfolge zu empfangen.

2. Verfahren nach Anspruch 1, wobei das Bestimmen, dass die UE (300, 1312A-1312D, 1400, 1702, 1806) die erste Multicast-Sitzung empfangen möchte, Bestimmen, dass die UE (300, 1312A-1312D, 1400, 1702, 1806) die erste Multicast-Sitzung empfangen möchte, basierend auf mindestens einem von Folgenden umfasst:
einem Kalender der UE (300, 1312A-1312D, 1400, 1702, 1806);
einer Nachricht, die von einer anderen UE empfangen wird;
einer Nachricht, die von einem anderen Netzwerkknoten empfangen wird; und
einer Angabe von einem Benutzer der UE (300, 1312A-1312D, 1400, 1702, 1806).

3. Verfahren nach einem der Ansprüche 1-2, wobei das Bestimmen, dass die UE (300, 1312A-1312D, 1400, 1702, 1806) die zweite Multicast-Sitzung empfangen möchte, Bestimmen, dass die UE (300, 1312A-1312D, 1400, 1702, 1806) die zweite Multicast-Sitzung empfangen möchte, basierend auf mindestens einem von Folgenden umfasst:
einem Kalender der UE (300, 1312A-1312D, 1400, 1702, 1806);
einer Nachricht, die von einer anderen UE empfangen wird;
einer Nachricht, die von einem anderen Netzwerkknoten empfangen wird; und
einer Angabe von einem Benutzer der UE (300, 1312A-1312D, 1400, 1702, 1806).

4. Verfahren nach einem der Ansprüche 1-3, wobei die Multicast-Sitzungen eine Mehrzahl von Multicast-Sitzungen umfassen und die Prioritätsliste eine Reihenfolge umfasst, in der die UE (300, 1312A-1312D, 1400, 1702, 1806) an Multicast-Sitzungen der Mehrzahl von Multicast-Sitzungen teilnehmen möchte.

5. Verfahren nach einem der Ansprüche 1-4, wobei das Senden der Prioritätsliste Signalisieren der Prioritätsliste als ein Informationselement in einer Funkressourcensteuerungsnachricht, RRC-Nachricht, an den Netzwerkknoten (302, 1310A-1310B, 1500, 1702, 1804) umfasst.

6. Verfahren nach einem der Ansprüche 1-4, wobei das Senden der Prioritätsliste Signalisieren der Prioritätsliste in einer Übertragung kleiner Datenmengen an den Netzwerkknoten (302, 1310A-1310B, 1500, 1702, 1804) umfasst.

7. Verfahren nach einem der Ansprüche 1-6, ferner umfassend:
Bestimmen (419), dass die UE (300, 1312A-1312D, 1400, 1702, 1806) die erste Multicast-Sitzung empfangen möchte;
Aktualisieren (421) der Prioritätsliste und Senden der aktualisierten Prioritätsliste an den Netzwerkknoten (302);
Empfangen (423) einer G-RNTI-Konfiguration, um die erste Multicast-Sitzung zu empfangen.

8. Verfahren nach einem der Ansprüche 1-7, ferner umfassend:
Bestimmen (425), dass die UE (300, 1312A-1312D, 1400, 1702, 1806) keine Multicast-Sitzungen empfangen möchte;
Verlassen (427) der ersten Multicast-Sitzung; und
Verlassen (429) der zweiten Multicast-Sitzung.

9. Verfahren nach Anspruch 8, wobei das Bestimmen, dass die UE (300, 1312A-1312D, 1400, 1702, 1806) keine Multicast-Sitzungen empfangen möchte, Bestimmen, dass die UE (300, 1312A-1312D, 1400, 1702, 1806) keine Multicast-Sitzungen empfangen möchte, basierend auf mindestens einem von Folgenden umfasst:
einem Kalender der UE (300, 1312A-1312D, 1400, 1702, 1806);
einer Nachricht, die von einer anderen UE empfangen wird; und
einer Angabe von einem Benutzer der UE (300, 1312A-1312D, 1400, 1702, 1806).

10. Verfahren in einem Netzwerkknoten (302, 1310A-1210B, 1500, 1702, 1804), umfassend:
Empfangen (701) einer Angabe von einer UE (300, 1312A-1312D, 1400, 1702, 1806), die nur eine temporäre Gruppen-Funknetzwerkkennung, G-RNTI, unterstützt, der G-RNTI, die die UE (300, 1312A-1312D, 1400, 1702, 1806) unterstützt;
Empfangen (703) einer Sitzungsaktivierung für die UE (300, 1312A-1312D, 1400, 1702, 1806);
Empfangen (705) einer Sitzungsaktivierung für eine zweite Multicast-Sitzung für die UE (300, 1312A-1312D, 1400, 1702, 1806);
Senden (707) einer G-RNTI-Konfiguration an die UE (300, 1312A-1312D, 1400, 1702, 1806), um die erste Multicast-Sitzung zu empfangen;
Empfangen (709) einer Angabe von einem Kernnetzwerk (304), dass die UE (300, 1312A-1312D, 1400, 1702, 1806) der zweiten Multicast-Sitzung beigetreten ist;
**gekennzeichnet durch**:
Senden (711) einer Anforderung für eine Prioritätsliste von Multicast-Sitzungen, an denen die UE teilgenommen hat, an die UE (300, 1312A-1312D, 1400, 1702, 1806);
Empfangen (713) der Prioritätsliste von der UE (300, 1312A-1312D, 1400, 1702, 1806); und
Senden (715) einer G-RNTI-Konfiguration an die UE (300, 1312A-1312D, 1400, 1702, 1806), um eine von der ersten oder der zweiten Multicast-Sitzung gemäß ihrer Prioritätsreihenfolge zu empfangen.

11. Verfahren nach Anspruch 10, ferner umfassend Empfangen zusätzlicher Sitzungsaktivierungen von dem CN (304) für zusätzliche Multicast-Sitzungen.

12. Verfahren nach einem der Ansprüche 10-11, wobei das Senden einer G-RNTI-Konfiguration an die UE (300, 1312A-1312D, 1400, 1702, 1806), um die zweite Multicast-Sitzung zu empfangen, Senden der G-RNTI-Konfiguration an die UE (300, 1312A-1312D, 1400, 1702, 1806), um die zweite Multicast-Sitzung zu empfangen, basierend auf einem ersten Eintrag in der Prioritätsliste umfasst, der die zweite Multicast-Sitzung angibt.

13. Verfahren nach einem der Ansprüche 10-12, ferner umfassend
Empfangen (717) einer aktualisierten Prioritätsliste von der UE (300, 1312A-1312D, 1400, 1702, 1806); und
in Reaktion darauf, dass der erste Eintrag in der Prioritätsliste die erste Multicast-Sitzung angibt, Senden (719) einer G-RNTI-Konfiguration an die UE (300), um die erste Multicast-Sitzung zu empfangen.

14. Benutzereinrichtung, UE, (300, 1312A-1312D, 1400, 1702, 1804), umfassend:
Verarbeitungsschaltungsanordnung (1402); und
Speicher (1410), der mit der Verarbeitungsschaltungsanordnung gekoppelt ist, wobei der Speicher Anweisungen umfasst, die bei Ausführung durch die Verarbeitungsschaltungsanordnung die UE (300, 1312A-1312D, 1400, 1702, 1804) zum Durchführen von Operationen nach einem der Ansprüche 1-9 veranlassen.

15. Netzwerkknoten (302, 1310A, 1310B, 1500, 1702, 1804), umfassend:
Verarbeitungsschaltungsanordnung (1502); und
Speicher (1504), der mit der Verarbeitungsschaltungsanordnung gekoppelt ist, wobei der Speicher Anweisungen umfasst, die bei Ausführung durch die Verarbeitungsschaltungsanordnung den Netzwerkknoten zum Durchführen von Operationen nach einem der Ansprüche 10-13 veranlassen.

## Revendications

1. Procédé pour un équipement utilisateur, UE, (300, 1312A-1312D, 1400, 1702, 1806) prenant en charge uniquement un identifiant temporaire de réseau radio de groupe, G-RNTI, pour adhérer à des sessions multicast, le procédé comprenant :
la transmission (401) d'une indication à un nœud de réseau (302, 1310A-1310B, 1500, 1702, 1804) du G-RNTI que l'UE (300, 1312A-1312D, 1400, 1702, 1806) prend en charge ;
la détermination (403) que l'UE (300, 1312A-1312D, 1400, 1702, 1806) souhaite recevoir une première session multicast ;
l'adhésion (405) à la première session multicast ;
la réception (407) d'une configuration G-RNTI pour recevoir la première session multicast ;
la détermination (409) que l'UE (300, 1312A-1312D, 1400, 1702, 1806) souhaite recevoir une deuxième session multicast ;
l'adhésion (411) à la deuxième session multicast ;
**caractérisé par** :
la réception (413) d'une demande d'une liste de priorités de sessions multicast auxquelles l'UE a adhéré, depuis le nœud de réseau (302, 1310A-1310B, 1500, 1702, 1804) ;
en réponse à la réception de la demande, la détermination (415) et la transmission de la liste de priorités au nœud de réseau (302, 1310A-1310B, 1500, 1702, 1804) ; et
la réception (417) d'une configuration G-RNTI pour recevoir l'une des première et deuxième sessions multicast selon leur ordre de priorité.

2. Procédé selon la revendication 1, dans lequel la détermination que l'UE (300, 1312A-1312D, 1400, 1702, 1806) souhaite recevoir la première session multicast comprend la détermination que l'UE (300, 1312A-1312D, 1400, 1702, 1806) souhaite recevoir la première session multicast sur la base d'au moins l'un parmi :
un calendrier sur l'UE (300, 1312A-1312D, 1400, 1702, 1806) ;
un message reçu depuis un autre UE ;
un message reçu depuis un nœud de réseau ; et
une indication depuis un utilisateur de l'UE (300, 1312A-1312D, 1400, 1702, 1806).

3. Procédé selon l'une quelconque des revendications 1 et 2, dans lequel la détermination que l'UE (300, 1312A-1312D, 1400, 1702, 1806) souhaite recevoir la deuxième session multicast comprend la détermination que l'UE (300, 1312A-1312D, 1400, 1702, 1806) souhaite recevoir la deuxième session multicast sur la base d'au moins l'un parmi :
un calendrier sur l'UE (300, 1312A-1312D, 1400, 1702, 1806) ;
un message reçu depuis un autre UE ;
un message reçu depuis un nœud de réseau ; et
une indication depuis un utilisateur de l'UE (300, 1312A-1312D, 1400, 1702, 1806).

4. Procédé selon l'une quelconque des revendications 1 à 3, dans lequel les sessions multicast comprennent une pluralité de sessions multicast et la liste de priorités comprend un ordre dans lequel l'UE (300, 1312A-1312D, 1400, 1702, 1806) souhaite adhérer à des sessions multicast de la pluralité de sessions multicast.

5. Procédé selon l'une quelconque des revendications 1 à 4, dans lequel la transmission de la liste de priorités comprend la signalisation de la liste de priorités sous forme d'un élément d'information dans un message de commande de ressources radio, RRC, au nœud de réseau (302, 1310A-1310B, 1500, 1702, 1804).

6. Procédé selon l'une quelconque des revendications 1 à 4, dans lequel la transmission de la liste de priorités comprend la signalisation de la liste de priorités dans une petite transmission de données au nœud de réseau (302, 1310A-1310B, 1500, 1702, 1804).

7. Procédé selon l'une quelconque des revendications 1 à 6, comprenant en outre :
la détermination (419) que l'UE (300, 1312A-1312D, 1400, 1702, 1806) souhaite recevoir la première session multicast ;
la mise à jour (421) de la liste de priorités et la transmission de la liste de priorités mise à jour au nœud de réseau (302) ;
la réception (423) d'une configuration de G-RNTI pour recevoir la première session multicast.

8. Procédé selon l'une quelconque des revendications 1 à 7, comprenant en outre :
la détermination (425) que l'UE (300, 1312A-1312D, 1400, 1702, 1806) ne souhaite pas recevoir de sessions multicast ;
la sortie (427) de la première session multicast ; et
la sortie (429) de la deuxième session multicast.

9. Procédé selon la revendication 8, dans lequel la détermination que l'UE (300, 1312A-1312D, 1400, 1702, 1806) ne souhaite pas recevoir de sessions multicast comprend la détermination que l'UE (300, 1312A-1312D, 1400, 1702, 1806) ne souhaite pas recevoir de sessions multicast sur la base d'au moins l'un parmi :
un calendrier sur l'UE (300, 1312A-1312D, 1400, 1702, 1806) ;
un message reçu depuis un autre UE ; et
une indication depuis un utilisateur de l'UE (300, 1312A-1312D, 1400, 1702, 1806).

10. Procédé dans un nœud de réseau (302, 1310A-1310B, 1500, 1702, 1804) comprenant :
la réception (701) d'une indication depuis un UE (300, 1312A-1312D, 1400, 1702, 1806) prenant en charge uniquement un identifiant temporaire de réseau radio de groupe, G-RNTI, du G-RNTI que l'UE (300, 1312A-1312D, 1400, 1702, 1806) prend en charge ;
la réception (703) d'une activation de session pour une première session multicast pour l'UE (300, 1312A-1312D, 1400, 1702, 1806) ;
la réception (705) d'une activation de session pour une deuxième session multicast pour l'UE (300, 1312A-1312D, 1400, 1702, 1806) ;
la transmission (707) d'une configuration de G-RNTI à l'UE (300, 1312A-1312D, 1400, 1702, 1806) pour recevoir la première session multicast ;
la réception (709) d'une indication depuis un réseau central (304) que l'UE (300, 1312A-1312D, 1400, 1702, 1806) a adhéré à la deuxième session multicast ;
**caractérisé par** :
la transmission (711) d'une demande d'une liste de priorités de sessions multicast auxquelles l'UE a adhéré, à l'UE (300, 1312A-1312D, 1400, 1702, 1806) ;
la réception (713) de la liste de priorités depuis l'UE (300, 1312A-1312D, 1400, 1702, 1806) ; et
la transmission (715) d'une configuration G-RNTI à l'UE (300, 1312A-1312D, 1400, 1702, 1806) pour recevoir l'une des première et deuxième sessions multicast selon leur ordre de priorité.

11. Procédé selon la revendication 10, comprenant en outre la réception d'activations de sessions supplémentaires depuis le CN (304) pour des sessions multicast supplémentaires.

12. Procédé selon l'une quelconque des revendications 10 et 11, dans lequel la transmission d'une configuration G-RNTI à l'UE (300, 1312A-1312D, 1400, 1702, 1806) pour recevoir la deuxième session multicast comprend la transmission de la configuration G-RNTI à l'UE (300, 1312A-1312D, 1400, 1702, 1806) pour recevoir la deuxième session multicast sur la base d'une première entrée dans la liste de priorités indiquant la deuxième session multicast.

13. Procédé selon l'une quelconque des revendications 10 à 12, comprenant en outre :
la réception (717) d'une liste de priorités mise à jour depuis l'UE (300, 1312A-1312D, 1400, 1702, 1806) ; et
en réponse au fait que la première entrée dans la liste de priorité indique la première session multicast, la transmission (719) d'une configuration de G-RNTI à l'UE (300) pour recevoir la première session multicast.

14. Equipement utilisateur, UE, (300, 1312A-1312D, 1400, 1702, 1806) comprenant :
une circuiterie de traitement (1402) ; et
une mémoire (1410) couplée à la circuiterie de traitement, dans lequel la mémoire inclut des instructions qui, lorsqu'elles sont exécutées par la circuiterie de traitement, amènent l'UE (300, 1312A-1312D, 1400, 1702, 1806) à réaliser des opérations selon l'une quelconque des revendications 1 à 9.

15. Nœud de réseau (302, 1310A-1310B, 1500, 1702, 1804) comprenant :
une circuiterie de traitement (1502) ; et
une mémoire (1504) couplée à la circuiterie de traitement, dans lequel la mémoire inclut des instructions qui, lorsqu'elles sont exécutées par la circuiterie de traitement, amènent le nœud de réseau à réaliser des opérations selon l'une quelconque des revendications 10 à 13.
